# EUROPEAN PATENT SPECIFICATION

(11) **EP 2 794 789 B1**
(45) Date of publication and mention of the grant of the patent: **01.06.2016**
(21) Application number: 12859613.7
(22) Date of filing: 19.12.2012
(51) Int. Cl.: C09D 201/10, C09D 7/12, C09D 171/02

(54) **WATERPROOF COATING MATERIAL AND BUILDING ROOF HAVING COATING FILM FORMED THEREFROM**
WASSERDICHTES BESCHICHTUNGSMATERIAL UND GEBÄUDEDACH MIT EINEM DARAUS GEFORMTEN BESCHICHTUNGSFILM
MATIÈRE DE REVÊTEMENT ÉTANCHE À L'EAU ET CONSTRUCTION DE TOITURE COMPORTANT UN FILM DE REVÊTEMENT FORMÉ À PARTIR DE CELLE-CI

(30) Priority: 20.12.2011 US 201161577882 P
(43) Date of publication of application: 29.10.2014
(73) Proprietor: Kaneka Corporation, Osaka-shi, Osaka 530-8288 (JP)
(72) Inventor: ANDO, Katsuhiro, Takasago-shi Hyogo 676-8688 (JP); OKAMOTO, Toshihiko, Takasago-shi Hyogo 676-8688 (JP)
(74) Representative: Hart-Davis, Jason
(86) International application number: PCT/JP2012/083756
(87) International publication number: WO 2013/094769

(56) References cited:
- EP-A1- 1 754 754
- EP-A1- 2 177 571
- WO-A1-2011/032653
- JP-A- 2005 015 676
- JP-A- 2006 160 929
- JP-A- 2008 303 650
- JP-A- 2011 219 654
- JP-A- 2012 007 078

## Description

### TECHNICAL FIELD

The present invention relates to a waterproof coating material comprising one or more organic polymers containing a silicon-containing group which contains a hydroxy or hydrolyzable group bonded to a silicon atom and can form a siloxane bond to be cross-linked (hereinafter, also referred to as a "reactive silyl group"), and also relates to a building roof having a coating film formed therefrom.

### BACKGROUND ART

Organic polymers containing at least one reactive silyl group in each molecule are known to have a characteristic that the polymer is cross-linked through the formation of a siloxane bond involving hydrolysis or other reactions of the reactive silyl group due to factors such as moisture even at room temperature, thereby giving a rubbery cured product.

Patent Literature 1 and Patent Literature 2 state that organic polymers having a backbone structure that comprises a polyoxyalkylene polymer or vinylic polymer among such reactive silyl group-containing polymers can be used for coating materials.

Meanwhile, as disclosed in Patent Literature 3, waterproof coating materials containing an acrylic emulsion are widely used as aqueous waterproof coating materials. They, however, are known to have a problem that formation of a coating film at low temperature or high humidity requires a long time. Further, as disclosed in Patent Literature 3, a problem with waterproofness is pointed out in some cases.

On the other hand, urethane-based waterproof coating materials are used as non-aqueous waterproof coating materials. Since they have high viscosity, a relatively large amount of a solvent needs to be added. Thus, some problems are pointed out such as emission of volatile organic compounds (VOCs) and increase in the number of operations since volatilization of the solvent requires a long time and therefore two or more application steps are required in order to ensure a desired film thickness.

As other waterproof coating materials, silicone-based waterproof coating materials are developed. They, however, suffer a problem with stain resistance; particularly, in the case that such a coating material is used on a roof, for example, some problems such as dust adhesion occur.

For the purpose of solving such problems, Patent Literature 4 discloses a waterproof coating material which contains a combination of a reactive silyl group-containing polyoxyalkylene polymer and a (meth)acrylate polymer, and can thereby satisfy a series of properties such as low VOC content, good curability under low-temperature and high-humidity conditions, and high stain resistance (less dust adhesion).

However, the coating film formed from such a coating material tends to absorb water when it rains, and thus the coating material has a problem of reduction in long-term adhesion durability and waterproofness. The present application aims to provide a waterproof coating material which can maintain a low VOC content, curability under low-temperature and high-humidity conditions, and stain resistance while maintaining adhesion durability and waterproofness for a long time, and also provide a building roof having a coating film formed from the coating material.

### CITATION LIST

### PATENT LITERATURE

Patent Literature 1: JP H5-65454 A
Patent Literature 2: JP H11-130931 A
Patent Literature 3: JP H10-298488 A
Patent Literature 4: JP 2008-303650 A

### SUMMARY OF INVENTION

### TECHNICAL PROBLEM

The present invention relates to a waterproof coating material and a roof having a coating film formed from the coating material. The present invention aims to provide a waterproof coating material and a coated roof which have a low VOC content, good film curability under low-temperature and high-humidity conditions, high stain resistance, and low water absorbency at the same time.

### SOLUTION TO PROBLEM

The present inventors have performed intensive studies for solving the above problems, and thereby found that the addition of a specific adhesion promoter into a waterproof coating material that mainly contains a reactive silyl group-containing organic polymer greatly improves the water absorbency of a cured product to be obtained, whereby the above problems can be solved. As a result, the present inventors have completed the present invention.

Specifically, the present invention relates to a waterproof coating material, comprising: (A) 100 parts by weight of at least one of a polyoxyalkylene polymer (a1) and a vinylic polymer (a2), the polymers each containing a reactive silyl group represented by the following formula (1):

-SiR¹₃₋ₐXₐ (1)

wherein each R¹ independently represents a C1-C20 alkyl group, a C6-C20 aryl group, a C7-C20 aralkyl group, or a triorganosiloxy group represented by (R')₃SiO- in which R's each independently represent a C1-C20 substituted or unsubstituted hydrocarbon group; each X independently represents a hydroxy group or a hydrolyzable group; and a represents 1, 2 or 3; and (B) 0.1 to 20 parts by weight of at least one compound including a compound (b3) obtained by partial condensation of silyl groups of an aminosilane alone or of a combination of an aminosilane and another alkoxysilane compound.

The component (a1) preferably has a backbone structure that comprises a polyoxypropylene polymer.

The component (a2) preferably has a backbone structure that comprises an alkyl (meth)acrylate copolymer.

Preferably, the component (B) further comprises at least one of a metal carboxylate (b1) and an amine compound (b2) having two or more reactive silyl groups that can form a siloxane bond to be cross-linked.

Preferably, a ratio [(Y2/Y1) × 100] of a weight of the component (a1) [Y2] to a total weight of the component (A) [Y1] is 55 wt% or higher.

Preferably, a ratio [(W2/W1) × 100] of a weight of the component (A) [W2] to a total weight of the waterproof coating material [W1] is 35 to 80 wt%.

The metal carboxylate (b1) in the component (B) is preferably used in an amount of 0.1 to 10 parts by weight.

The metal carboxylate (b1) in the component (B) is preferably a tin(II) carboxylate compound.

Preferably, a combination of the amine compound (b2) having two or more reactive silyl groups that can form a siloxane bond to be cross-linked and the compound (b3) obtained by partial condensation of silyl groups of an aminosilane alone or of a combination of an aminosilane and another alkoxysilane compound, or the compound (b3) obtained by partial condensation of silyl groups of an aminosilane alone or of a combination of an aminosilane and another alkoxysilane compound, in the component (B) is used in an amount of 0.1 to 10 parts by weight.

Preferably, the waterproof coating material further comprises (C) 0.01 to 5 parts by weight of an amine compound.

The component (C) is preferably a compound containing a primary amino group.

The present invention also relates to a waterproofing method, comprising forming on a building roof a coating film with a thickness of 4 to 120 mils from any one of the aforementioned waterproof coating materials.

The present invention also relates to a building roof, comprising a coating film with a thickness of 4 to 120 mils formed from any one of the aforementioned waterproof coating materials.

The present invention also relates to a waterproofing method in which a desired thickness of a coating film is formed from any one of the aforementioned waterproof coating materials by a single application.

The present invention also relates to a building roof in which a desired thickness of a coating film is formed from any one of the aforementioned waterproof coating materials by a single application.

### ADVANTAGEOUS EFFECTS OF INVENTION

The waterproof coating material and the coated roof according to the present invention show a low VOC content, good film curability under low-temperature and high-humidity conditions, high stain resistance, and low water absorbency.

### DESCRIPTION OF EMBODIMENTS

Hereinafter, the present invention will be described in detail.

### «Component (A) »

The reactive silyl group in the polyoxyalkylene polymer (a1) and/or the vinylic polymer (a2) in the component (A) is a group which contains a hydroxy or hydrolyzable group bonded to a silicon atom and can form a siloxane bond to be cross-linked through a reaction accelerated by a silanol condensation catalyst. Examples of the reactive silyl group include groups represented by the following formula (1):

-SiR¹₃₋ₐXₐ (1)

wherein each R¹ independently represents a C1-C20 alkyl group, a C6-C20 aryl group, a C7-C20 aralkyl group, or a triorganosiloxy group represented by (R')₃SiO- in which R's each independently represent a C1-C20 substituted or unsubstituted hydrocarbon group; each X independently represents a hydroxy group or a hydrolyzable group; and a represents 1, 2 or 3.

The hydrolyzable group is not particularly limited, and may be a conventionally known hydrolyzable group. Specific examples thereof include a hydrogen atom, halogen atoms, alkoxy groups, acyloxy groups, ketoxymate groups, amino groups, amido groups, acid amido groups, aminooxy groups, mercapto groups, and alkenyloxy groups. Preferred among these are a hydrogen atom, alkoxy groups, acyloxy groups, ketoxymate groups, amino groups, amido groups, aminooxy groups, mercapto groups, and alkenyloxy groups. Particularly preferred are alkoxy groups in terms of mild hydrolysis and easy handleability.

One to three hydrolyzable or hydroxy groups can be bonded to one silicon atom, and the number of groups is preferably two or three in terms of curability. In the case that two or more hydrolyzable or hydroxy groups are bonded to a silicon atom, these groups may be the same as or different from each other. Reactive silyl groups each containing three hydroxy or hydrolyzable groups on a silicon atom are preferred in terms of having high activity to achieve favorable curability, and of leading to cured products with excellent recovery, durability, and creep resistance. On the other hand, reactive silyl groups each containing two hydroxy or hydrolyzable groups on a silicon atom are preferred in terms of having excellent storage stability, and of leading to cured products with high elongation and high strength.

Specific examples of R¹ in the formula (1) include alkyl groups such as a methyl group and an ethyl group; cycloalkyl groups such as a cyclohexyl group; aryl groups such as a phenyl group; aralkyl groups such as a benzyl group; and triorganosiloxy groups represented by (R')₃SiO-with R's each being a group such as a methyl group or a phenyl group. Particularly preferred among these is a methyl group.

More specific examples of the reactive silyl group include a trimethoxysilyl group, a triethoxysilyl group, a triisopropoxysilyl group, a dimethoxymethylsilyl group, a diethoxymethylsilyl group, and a diisopropoxymethylsilyl group. Preferred are a trimethoxysilyl group, a triethoxysilyl group, and a dimethoxymethylsilyl group because they have high activity to achieve favorable curability. Particularly preferred is a trimethoxysilyl group.

Also, a dimethoxymethylsilyl group is particularly preferred in terms of storage stability. Also, a triethoxysilyl group and a diethoxymethylsilyl group are particularly preferred because they produce ethanol as an alcohol to be generated in connection with the hydrolysis reaction of the reactive silyl group, which means they have higher safety.

The reactive silyl group may be introduced by a conventionally known method. Some examples of the method are mentioned below.
(i) A polyoxyalkylene polymer containing a functional group such as a hydroxy group in a molecule is allowed to react with an organic compound containing an unsaturated group and an active group that is reactive with the functional group to provide an unsaturated group-containing polyoxyalkylene polymer. Alternatively, the functional group-containing polyoxyalkylene polymer is copolymerized with an unsaturated group-containing epoxy compound to provide an unsaturated group-containing polyoxyalkylene polymer. Then, the obtained reaction product is allowed to react with a reactive silyl group-containing hydrosilane and is thereby hydrosilylated.
(ii) An unsaturated group-containing polyoxyalkylene polymer obtained in the same manner as in the method (i) is allowed to react with a compound containing a mercapto group and a reactive silyl group.
(iii) A polyoxyalkylene polymer containing a functional group such as a hydroxy group, an epoxy group, or an isocyanato group in a molecule is allowed to react with a compound containing a reactive silyl group and a functional group that is reactive with the former functional group.

Preferred among these methods is the method (i) or the method (iii) in such a mode that a hydroxy-terminated polymer is allowed to react with a compound containing an isocyanato group and a reactive silyl group because these methods achieve a high conversion ratio in a relatively short period of reaction time. Particularly preferred is the method (i) because a waterproof coating material containing a reactive silyl group-containing polyoxyalkylene polymer prepared by the method (i) has lower viscosity and better workability compared with those containing a polyoxyalkylene polymer prepared by the method (iii), and also because a polyoxyalkylene polymer prepared by the method (ii) has a strong odor due to mercaptosilane.

Specific examples of the hydrosilane compound used in the method (i) include, but not limited to, halogenated silanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, phenyldimethoxysilane, and 1-[2-(trimethoxysilyl)ethyl]-1,1,3,3-tetramethyldisiloxane; acyloxysilanes such as methyldiacetoxysilane and phenyldiacetoxysilane; and ketoxymate silanes such as bis(dimethylketoxymate)methylsilane and bis(cyclohexylketoxymate)methylsilane. Particularly preferred among these are halogenated silanes and alkoxysilanes. In particular, alkoxysilanes are most preferred because waterproof coating materials to be provided therefrom can be mildly hydrolyzed and are easy to handle. Particularly preferred among the alkoxysilanes is methyldimethoxysilane because it is easily available and gives high curability, storage stability, elongation property, and tensile strength to a waterproof coating material containing a polyoxyalkylene polymer to be provided. In terms of the curability and recovery of a waterproof coating material to be provided, trimethoxysilane is particularly preferred.

The synthesis method (ii) is not particularly limited, and examples thereof include a method of introducing a compound containing a mercapto group and a reactive silyl group into an unsaturated-bond moiety of a polyoxyalkylene polymer by radical addition reaction in the presence of a radical initiator and/or a radical generation source. Specific examples of the compound containing a mercapto group and a reactive silyl group include, but not limited to, 3-mercaptopropyltrimethoxysilane, 3-mercaptopropylmethyldimethoxysilane, 3-mercaptopropyltriethoxysilane, 3-mercaptopropylmethyldiethoxysilane, mercaptomethyltrimethoxysilane, and mercaptomethyltriethoxysilane.

The synthesis method (iii) in which a hydroxy-terminated polymer is allowed to react with a compound containing an isocyanato group and a reactive silyl group is not particularly limited, and examples thereof include a method as disclosed in JP H03-47825 A. Specific examples of the compound containing an isocyanato group and a reactive silyl group include, but not limited to, 3-isocyanatopropyltrimethoxysilane, 3-isocyanatopropylmethyldimethoxysilane, 3-isocyanatopropyltriethoxysilane, 3-isocyanatopropylmethyldiethoxysilane, isocyanatomethyltrimethoxysilane, isocyanatomethyltriethoxysilane, isocyanatomethyldimethoxymethylsilane, and isocyanatomethyldiethoxymethylsilane.

In the case of silane compounds in which three hydrolyzable groups are bonded to one silicon atom, such as trimethoxysilane, disproportionation may proceed. As the disproportionation proceeds, considerably dangerous compounds such as dimethoxysilane and tetrahydrosilane may be generated. In the case of 3-mercaptopropyltrimethoxysilane or 3-isocyanatopropyltrimethoxysilane, however, such disproportionation will not proceed. Thus, the synthesis method (ii) or (iii) is preferably used in the case that a group in which three hydrolyzable groups are bonded to one silicon atom, such as a trimethoxysilyl group, is used as the silicon-containing group.

On the other hand, the disproportionation will not proceed in the case of silane compounds represented by the following formula (2):

H-(SiR²₂O)ₘSiR²₂-R³-SiX₃ (2)

wherein X is as defined above; (2×m+2) R²s each independently represent a hydrocarbon group or a triorganosiloxy group represented by -OSi(R")₃ in which R"s each independently represent a C1-C20 substituted or unsubstituted hydrocarbon group, and in terms of availability and cost, R²s each are preferably a C1-C20 hydrocarbon group, more preferably a C1-C8 hydrocarbon group, and particularly preferably a C1-C4 hydrocarbon group; R³ represents a divalent organic group, and in terms of availability and cost, R³ is preferably a C1-C12 divalent hydrocarbon group, more preferably a C2-C8 divalent hydrocarbon group, and particularly preferably a C2 divalent hydrocarbon group; and m represents an integer of 0 to 19, and in terms of availability and cost, it is preferably 1. For this reason, a silane compound represented by the formula (2) is preferably used in the case of introducing a group in which three hydrolyzable groups are bonded to one silicon atom by the synthesis method (i). Specific examples of silane compounds represented by the formula (2) include 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The reactive silyl group-containing polyoxyalkylene polymer as the component (a1) may have a linear or branched structure. The number average molecular weight thereof is about 500 to 100,000, and more preferably 1,000 to 50,000 when it is determined by GPC and expressed on the polystyrene equivalent basis. If the number average molecular weight is lower than 500, a cured product to be provided is likely to be poor in elongation property. If it is higher than 100,000, a curable composition to be provided is likely to have high viscosity and be poor in workability.

The polyoxyalkylene polymer suitably has at least one reactive silyl group, preferably 1.1 to 4 reactive silyl groups, per polymer molecule on average in order to provide a rubbery cured product with high strength, high elongation, and low elastic modulus. If the polymer has less than one reactive silyl group per molecule on average, the curability may be insufficient, which makes it difficult to provide a favorable rubber elastic behavior. The reactive silyl group may be located at a backbone terminal, or at a side chain terminal, or at both terminals, of the polyoxyalkylene polymer chain. Particularly in the case that the reactive silyl group is located at a backbone terminal of the molecular chain, the polyoxyalkylene polymer component in the resulting cured product has an increased effective network size. Thus, a rubbery cured product having higher strength, higher elongation, and lower elastic modulus tends to be obtained.

The aforementioned polyoxyalkylene polymer (a1) is a polymer essentially having a repeating unit represented by the following formula (3):

-R⁴-O- (3)

wherein R⁴ represents a C1-C14 linear or branched alkylene group. R⁴ in the formula (3) is preferably a C1-C14, more preferably C2-C4, linear or branched alkylene group. Specific examples of the repeating unit represented by the formula (3) include -CH₂O- -CH₂CH₂O-, -CH₂CH(CH₃)O-, - CH₂CH(C₂H₅)O-, -CH₂C(CH₃)₂O-, and -CH₂CH₂CH₂CH₂O-. The backbone structure of the polyoxyalkylene polymer may have one species of repeating unit, or two or more species of repeating units. Especially in such applications as waterproof materials, those containing polymers which are mainly based on a propylene oxide polymer are preferred because they are amorphous and have relatively low viscosity.

Examples of the method for synthesizing the polyoxyalkylene polymer (a1) include, but not particularly limited to, a polymerization method using an alkali catalyst such as KOH; a polymerization method using a transition metal compound-porphyrin complex catalyst such as a complex obtained by reaction between an organoaluminum compound and a porphyrin, as disclosed in JP S61-215623 A; a polymerization method using a double metal cyanide complex catalyst, as disclosed in documents such as JP S46-27250 B and JP S59-15336 B and US Patent Nos. 3,278,457, 3,278,458, 3,278,459, 3,427,256, 3,427,334 and 3,427,335; a polymerization method using a catalyst containing a polyphosphazene salt, as disclosed in JP H10-273512 A; and a polymerization method using a catalyst containing a phosphazene compound, as disclosed in JP H11-060722 A.

Examples of the method for producing the polyoxyalkylene polymer (a1) containing a reactive silyl group include, but not particularly limited to, methods disclosed in documents such as JP S45-36319 B and JP S46-12154 B; JP S50-156599 A, JP S54-6096 A, JP S55-13767 A, JP S55-13468 A, and JP S57-164123 A; JP H03-2450 B; and US Patent Nos. 3,632,557, 4,345,053, 4,366,307, and 4,960,844; and methods disclosed in JP S61-197631 A, JP S61-215622 A, JP S61-215623 A, JP S61-218632 A, JP H03-72527 A, JP H03-47825 A, and JP H08-231707 A, which can provide polyoxyalkylene polymers with a high molecular weight and a narrow molecular weight distribution, namely, with a number average molecular weight of 6,000 or higher and Mw/Mn of 1.6 or less.

Each of reactive silyl group-containing polyoxyalkylene polymers mentioned above may be used alone, or two or more of them may be used in combination.

The polyoxyalkylene polymer (a1) may also have other components such as a urethane bond-containing component in the backbone structure as long as they will not greatly impair the effects of the present invention.

The urethane bond-containing component is not particularly limited, and examples thereof include groups formed by reaction between an isocyanato group and an active hydrogen group (hereinafter, also referred to as amide segments).

The amide segments are groups represented by the following formula (4):

-NR⁵-C(=O)- (4)

wherein R⁵ represents a hydrogen atom or a monovalent organic group, preferably a C1-C20 substituted or unsubstituted monovalent hydrocarbon group, and more preferably a C1-C8 substituted or unsubstituted monovalent hydrocarbon group.

Specific examples of the amide segments include a urethane group formed by reaction between an isocyanato group and a hydroxy group; a urea group formed by reaction between an isocyanato group and an amino group; and a thiourethane group formed by reaction between an isocyanato group and a mercapto group. In the present invention, groups formed by a reaction of active hydrogen in the urethane group, urea group, or thiourethane group with an isocyanato group are also included in the groups represented by the formula (4).

Examples of industrially convenient methods for producing a polyoxyalkylene polymer containing an amide segment and a reactive silyl group include those disclosed in JP S46-12154 B (U.S. Patent No. 3,632,557), JP S58-109529 A (U.S. Patent No. 4,374,237), JP S62-13430 A (U.S. Patent No. 4,645,816), JP H08-53528 A (EP 0676403), JP H10-204144 A (EP 0831108), JP 2003-508561 T (U.S. Patent No. 6,197,912), JP H06-211879 A (U.S. Patent No. 5, 364, 955), JP H10-53637 A (U.S. Patent No. 5,756,751), JP H11-100427 A, JP 2000-169544 A, JP 2000-169545 A, JP 2002-212415 A, Japanese Patent No. 3313360, U.S. Patent Nos. 4,067,844 and 3,711,445, JP 2001-323040 A, JP H11-279249 A (U.S. Patent No. 5,990,257), JP 2000-119365 A (U.S. Patent No. 6,046,270), JP S58-29818 A (U.S. Patent No. 4,345,053), JP H03-47825 A (U.S. Patent No. 5,068,304), JP H11-60724 A, JP 2002-155145 A, JP 2002-249538 A, WO 03/018658, WO 03/059981, JP H06-211879 A (US Patent No. 5,364,955), JP H10-53637 A (US Patent No. 5,756,751), JP H10-204144 A (EP 0831108), JP 2000-169544 A, JP 2000-169545 A, and JP 2000-119365 A (US Patent No. 6,046,270).

The component (A) in the present invention may contain a vinylic polymer containing a reactive silyl group as the component (a2), if necessary.

Vinylic monomers that can form the backbone of the vinylic polymer (a2) are not particularly limited, and various monomers can be used. Examples thereof include (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, isononyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, 3-(methacryloyloxypropyl)trimethoxysilane, 3-(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate; aromatic vinylic monomers such as styrene, vinyltoluene, α-methylstyrene, chlorostyrene, and styrenesulfonic acid and salts thereof; fluorine-containing vinylic monomers such as perfluoroethylene, perfluoropropylene, and vinylidene fluoride; silicon-containing vinylic monomers such as vinyltrimethoxysilane and vinyltriethoxysilane; maleic anhydride, maleic acid, and monoalkyl or dialkyl esters of maleic acid; fumaric acid, and monoalkyl or dialkyl esters of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile-based monomers such as acrylonitrile and methacrylonitrile; amido group-containing vinylic monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, and allyl alcohol. Each of these may be used alone, or a plurality of them may be copolymerized.

The backbone of the vinylic polymer (a2) is preferably formed by mainly polymerizing at least one monomer selected from the group consisting of (meth)acrylic monomers, acrylonitrile-based monomers, aromatic vinylic monomers, fluorine-containing vinylic monomers, and silicon-containing vinylic monomers. The term "mainly" herein means that the monomer in question accounts for 30 mol% or more, preferably 50 mol% or more, of the monomer units constituting the vinylic polymer.

In terms of physical properties and the like of the resulting,product, polymers formed from a styrenic monomer or a (meth)acrylic monomer are preferred among these. More preferred are (meth)acrylate polymers formed from an acrylate monomer or a methacrylate monomer, and particularly preferred are acrylate polymers formed from an acrylate monomer.

In applications requiring rubber elasticity, the glass transition temperature of the vinylic polymer (a2) is, although not limited, preferably lower than room temperature or its working temperature.

The number average molecular weight of the vinylic polymer (a2) is not particularly limited, and it is preferably in the range from 500 to 1,000,000, more preferably from 1,000 to 100,000, and still more preferably from 2,000 to 30,000, in GPC measurement.

The method for synthesizing a (meth)acrylate polymer as the component (a2) is not particularly limited, and any known method can be used.

In order to obtain a (meth)acrylate polymer with a narrow molecular weight distribution and low viscosity, living radical polymerization is preferably used. Particularly preferred is atom transfer radical polymerization.

In atom transfer radical polymerization, an organohalide, especially an organohalide containing a highly reactive carbon-halogen bond (for example, a carbonyl compound having a halogen at the α-position or a compound having a halogen at the benzylic position), a sulfonyl halide compound, or the like is used as an initiator. In order to obtain a polymer having two or more growing ends in each molecule, it is preferable to use an organohalide or sulfonyl halide compound having two or more starting points as an initiator. Specific examples of such an initiator include diethyl 2,5-dibromoadipate.

Any transition metal complex can be used as a polymerization catalyst, and preferred are metal complexes whose central metal is an element selected from the seventh, eighth, ninth, tenth, and eleventh groups of the periodic table. More preferred complexes include those whose central metal is zerovalent copper, monovalent copper, divalent ruthenium, divalent iron, or divalent nickel. Particularly preferred are copper complexes. Specific examples of the monovalent copper compounds include cuprous chloride, cuprous bromide, cuprous iodide, cuprous cyanide, cuprous oxide, and cuprous perchlorate. In the case of using a copper compound, the following ligand can be added in order to increase the catalytic activity: 2,2'-bipyridyl and its derivatives, 1,10-phenanthroline and its derivatives, and polyamines such as tetramethylethylenediamine, pentamethyldiethylenetriamine, and hexamethyl tris(2-aminoethyl)amine, and the like. The ligand is preferably a nitrogenous compound, more preferably a chelate-type nitrogenous compound, and still more preferably N,N,N',N",N"-pentamethyldiethylenetriamine. In addition, a tristriphenyl phosphine complex of divalent ruthenium chloride (RuCl₂(PPh₃)₃) is also suitable as a catalyst. In the case of using a ruthenium compound as a catalyst, an aluminum alkoxide is added as an activator. Further, suitable catalysts include a bistriphenyl phosphine complex of divalent iron (FeCl₂(PPh₃)₂), a bistriphenyl phosphine complex of divalent nickel (NiCl₂(PPh₃)₂), and a bistributyl phosphine complex of divalent nickel (NiBr₂(PBu₃)₂).

Polymerization can be performed without any solvent or in any solvent. Examples of the solvent include: hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone, and methyl isobutyl ketone; alcohol solvents such as methanol, ethanol, propanol, isopropanol, n-butyl alcohol, and t-butyl alcohol; nitrile solvents such as acetonitrile, propionitrile, and benzonitrile; ester solvents such as ethyl acetate and butyl acetate; and carbonate solvents such as ethylene carbonate and propylene carbonate. Each of these may be used alone, or two or more of these may be used in admixture.

Polymerization may be performed at a temperature from 0°C to 200°C, preferably from 50°C to 150°C, although not limited.

The atom transfer radical polymerization in the present invention encompasses what is called reverse atom transfer radical polymerization. The reverse atom transfer radical polymerization is a process in which a common radical initiator such as a peroxide is allowed to act on a usual atom transfer radical polymerization catalyst that is in as highly an oxidized state as when a radical is generated (for example, Cu(II') in the case of using a Cu(I) catalyst), so that an equilibrium state similar to that in the atom transfer radical polymerization is achieved (see Macromolecules, 1999, 32, 2872).

Other than the living radical polymerization, free radical polymerization utilizing a chain transfer agent may be used as the method for synthesizing a (meth)acrylate polymer as the component (a2).

Examples of the method for synthesizing the backbone of the vinylic polymer (a2) by free radical polymerization include common vinyl polymerization methods, for example, a solution polymerization method involving radical reaction. The polymerization can typically be performed by reaction of the aforementioned monomers with a radical initiator, a chain transfer agent, and the like at 50°C to 150°C.

Examples of the radical initiator include azo initiators such as 2,2'-azobisisobutyronitrile, 2,2'-azobis(2-methylbutyronitrile), 4,4'-azobis(4-cyanovaleric) acid, 1,1'-azobis(1-cyclohexanecarbonitrile), azobisisobutyric acid amidine hydrochloride, and 2,2'-azobis(2,4-dimethylvaleronitrile); and organic peroxide initiators such as benzoyl peroxide and di-tert-butyl peroxide. It is preferable to use an azo initiator because such an initiator is not affected by solvents used for polymerization and it is less likely to cause danger such as explosion.

Examples of the chain transfer agent include mercaptans such as n-dodecylmercaptan, tert-dodecylmercaptan, laurylmercaptan, 3-mercaptopropyltrimethoxysilane, 3-mercaptopropylmethyldimethoxysilane, 3-mercaptopropyltriethoxysilane, and 3-mercaptopropylmethyldiethoxysilane, and halogenous compounds.

The polymerization may be performed in a solvent. Preferred examples of the solvent include non-reactive solvents such as ethers, hydrocarbons, and esters.

With respect to the reactive silyl group of the vinylic polymer (a2), the aforementioned reactive silyl groups represented by the formula (1) can also be used.

The following will describe the method for introducing a reactive silyl group into the vinylic polymer, but the method is not limited to the following. Examples of the method for synthesizing the vinylic polymer (a2) having at least one reactive silyl group include:
(I) a method in which a hydrosilane compound containing a reactive silyl group is addition-reacted with a vinylic polymer having at least one alkenyl group in the presence of a hydrosilylation catalyst;
(II) a method in which a vinylic polymer having at least one hydroxy group is reacted with a compound containing a reactive silyl group and a group reactive with a hydroxy group, such as an isocyanato group, in each molecule;
(III) a method in which a compound containing a polymerizable alkenyl group and a reactive silyl group together in each molecule is involved in the synthesis of a vinylic polymer by radical polymerization;
(IV) a method in which a reactive silyl group-containing chain transfer agent is used in the synthesis of a vinylic polymer by radical polymerization; and
(V) a method in which a vinylic polymer having at least one highly reactive carbon-halogen bond is reacted with a compound containing a reactive silyl group and a stable carbanion in each molecule.

In terms of the curability of the waterproof coating material and the physical properties of a cured product thereof, the number of reactive silyl groups in the vinylic polymer (a2) is preferably at least 1.1 but not more than 4.0, and more preferably at least 1.2 but not more than 3.5, on average.

The component (A) in the present invention can contain the polyoxyalkylene polymer (a1) and the vinylic polymer (a2) at any ratio. The component (a1) is effective to reduce the viscosity of the waterproof coating material, impart curability under low-temperature and high-humidity conditions, and impart toughness to a coating film formed by curing the coating material. The component (a2) is effective to enhance the weather resistance of the waterproof coating material and suppress exudation of base material components on the coating film. Particularly in order to effectively reduce the water absorption rate of the coating film while securing the properties such as the workability and curability of the waterproof coating material, the toughness of the coating film, weather resistance, and resistance to exudation of base material components on the coating film, the ratio [(Y2/Y1) × 100] of the weight of the component (a1) [Y2] to the total weight of the component (A) [Y1] is preferably 55 wt% or higher, more preferably 60 wt% or higher, and most preferably 75 wt% or higher.

The ratio [(W2/W1) × 100] of the weight of the component (A) [W2] to the total weight of the waterproof coating material [W1] can be adjusted as appropriate. In consideration of the workability and curability of the waterproof coating material and the toughness of a coating film to be obtained, the ratio is preferably in the range from 35 to 95 wt%, more preferably in the range from 40 to 80 wt%, and most preferably in the range from 45 to 70 wt%.

### <<Component (B)>>

The component (B) in the present invention is at least one compound selected from the group consisting of a metal carboxylate (b1), an amine compound (b2) having two or more reactive silyl groups that can form a siloxane bond to be cross-linked, and a compound (b3) obtained by partial condensation of silyl groups of an aminosilane alone or of a combination of an aminosilane and another alkoxysilane compound. Each compound is effective to reduce the water absorption rate of the coating film and enhance the adhesion durability and waterproof durability.

The metal carboxylate (b1) not only reduces the water absorption rate of the coating film but also serves as what is called a silanol condensation catalyst which can allow the hydroxy or hydrolyzable group bonded to a silicon atom in the polyoxyalkylene polymer (a1) and the vinylic polymer (a2) to form a siloxane bond.

The component (b1) usable in the present invention is not particularly limited, and various compounds can be used.

Specifically, preferred examples of the component (b1) include tin carboxylates, lead carboxylates, bismuth carboxylates, potassium carboxylates, calcium carboxylates, barium carboxylates, titanium carboxylates, zirconium carboxylates, hafnium carboxylates, vanadium carboxylates, manganese carboxylates, iron carboxylates, cobalt carboxylates, nickel carboxylates, and cerium carboxylates because they have high catalytic activity. More preferred are tin carboxylates, lead carboxylates, bismuth carboxylates, titanium carboxylates, iron carboxylates, and zirconium carboxylates. Particularly preferred are tin carboxylates. Most preferred are tin(II) carboxylates from the viewpoint of the balance of properties such as availability, cost, and catalytic activity.

With respect to carboxylic acids containing the acid group of the metal carboxylate (b1), hydrocarbon carboxylic acid group-containing compounds whose carbon number is 2 to 40 including the carbonyl carbon are suitable. From the viewpoint of availability, C2-C20 hydrocarbon carboxylic acids can be particularly suitably used.

Specific examples thereof include: straight-chain saturated fatty acids such as acetic acid, propionic acid, butyric acid, valeric acid, caproic acid, enanthic acid, caprylic acid, 2-ethylhexanoic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid, and lacceric acid; monoene unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequeic acid, acrylic acid, methacrylic acid, angelic acid, crotonic acid, isocrotonic acid, and 10-undecenoic acid; polyene unsaturated fatty acids such as linoelaidic acid, linolic acid, 10,12-octadecadienoic acid, hiragonic acid, α-eleostearic acid, 2-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid, and docosahexaenoic acid; branched fatty acids such as 1-methylbutyric acid, isobutyric acid, 2-ethylbutyric acid, isovaleric acid, tuberculostearic acid, pivalic acid, and neodecanoic acid; triple-bond fatty acids such as propiolic acid, tariric acid, stearolic acid, crepenynic acid, xymenynic acid, and 7-hexadecynoic acid; alicyclic carboxylic acids such as naphthenic acid, malvalic acid, sterculic acid, hydnocarpic acid, chaulmoogric acid, and gorlic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, ricinolic acid, camlolenic acid, licanic acid, pheronic acid, and cerebronic acid; and halogenated monocarboxylic acids such as chloroacetic acid, 2-chloroacrylic acid, and chlorobenzoic acid. Examples of aliphatic dicarboxylic acids include: saturated dicarboxylic acids such as adipic acid, azelaic acid, pimelic acid, suberic acid, sebacic acid, ethylmalonic acid, glutaric acid, oxalic acid, malonic acid, succinic acid, and oxydiacetic acid; and unsaturated dicarboxylic acids such as maleic acid, fumaric acid, acetylenedicarboxylic acid, and itaconic acid. Examples of aliphatic polycarboxylic acids include tricarboxylic acids such as aconitic acid, citric acid, and isocitric acid. Examples of aromatic carboxylic acids include: aromatic monocarboxylic acids such as benzoic acid, 9-anthracenecarboxylic acid, atrolactic acid, anisic acid, isopropylbenzoic acid, salicylic acid, and toluic acid; and aromatic polycarboxylic acids such as phthalic acid, isophthalic acid, terephthalic acid, carboxyphenylacetic acid, and pyromellitic acid. Other examples include amino acids such as alanine, leucine, threonine, aspartic acid, glutamic acid, arginine, cysteine, methionine, phenylalanine, tryptophan, and histidine.

The carboxylic acid is preferably 2-ethyl hexanoic acid, octylic acid, neodecanoic acid, oleic acid, or naphthenic acid, for example, particularly because they are easily available at low cost and well compatible with the cross-linkable silyl group-containing organic polymer component (A) which consists of the polyoxyalkylene polymer (a1) and/or the vinylic polymer (a2).

If the carboxylic acid has a high melting point (high crystallinity), the metal carboxylate containing such an acid group also has a high melting point, and thus the metal carboxylate is difficult to handle (poor in workability). Hence, the melting point of the carboxylic acid is preferably 65°C or lower, more preferably from-50°C to 50°C, and particularly preferably from -40°C to 35°C.

If the carboxylic acid has a high carbon number (high molecular weight), the metal carboxylate (b1) containing such an acid group is in a state of solid or liquid with high viscosity, and thus the metal carboxylate is difficult to handle (poor in workability). Conversely, if the carboxylic acid has a low carbon number (low molecular weight), the component (b1) containing such an acid group may turn out to contain a large amount of a component that is easily evaporated by heating, and thus the catalytic activity of the metal carboxylate (b1) may be poor. In particular, if the waterproof coating material is thinly spread (formed into a thin film), the amount of evaporation by heating may be large and the catalytic activity of the component (b1) may be greatly reduced. Hence, the carboxylic acid preferably has a carbon number including the carbon of the carbonyl group of 2 to 20, more preferably 6 to 17, and particularly preferably 8 to 12.

From the viewpoint of handleability (workability, viscosity), the metal carboxylate (b1) is preferably a metal salt of a dicarboxylic or monocarboxylic acid, and more preferably a metal salt of a monocarboxylic acid.

The metal carboxylate (b1) is preferably a metal carboxylate whose carbon atom adjacent to the carbonyl group is a tertiary carbon (e.g. tin 2-ethylhexanoate) or a quaternary carbon (e.g. tin neodecanoate, tin pivalate) because of its high curing rate. It is particularly preferably a metal carboxylate whose carbon atom adjacent to the carbonyl group is a quaternary carbon. Also, the metal carboxylate whose carbon atom adjacent to the carbonyl group is a quaternary carbon is excellent in adhesion in comparison with other metal carboxylates.

Specific examples of carboxylic acids containing the acid group of the metal carboxylate whose carbon atom adjacent to the carbonyl group is a quaternary carbon include: acyclic monocarboxylic acids such as pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, neodecanoic acid, versatic acid, and 2,2-dimethyl-3-hydroxypropionic acid; acyclic dicarboxylic acids such as dimethylmalonic acid, ethylmethylmalonic acid, diethylmalonic acid, 2,2-dimethylsuccinic acid, 2,2-diethylsuccinic acid, and 2,2-dimethylglutaric acid; acyclic tricarboxylic acids such as 3-methylisocitric acid and 4,4-dimethylaconitic acid; and cyclic carboxylic acids such as 1-methylcyclopentanecarboxylic acid, 1,2,2-trimethyl-1,3-cyclopentanedicarboxylic acid, 1-methylcyclohexanecarboxylic acid, 2-methylbicyclo[2.2.1]-5-heptene-2-carboxylic acid, 2-methyl-7-oxabicyclo[2.2.1]-5-heptene-2-carboxylic acid, 1-adamantanecarboxylic acid, bicyclo[2.2.1]heptane-1-carboxylic acid, and bicyclo[2.2.2]octane-1-carboxylic acid. There are many natural compounds having such a structure, and these natural compounds can also be used, of course.

Metal salts of monocarboxylic acids are preferred, and metal salts of acyclic monocarboxylic acids are more preferred, particularly because they are well compatible with the component (A) and are easy to handle. Further, metal salts of pivalic acid, neodecanoic acid, versatic acid, 2,2-dimethyloctanoic acid, 2-ethyl-2,5-dimethylhexanoic acid, or the like are particularly preferred because they are easily available.

With respect to such a carboxylic acid containing the acid group of the metal carboxylate whose carbon atom adjacent to the carbonyl group is a quaternary carbon, the carbon number thereof is preferably 5 to 20, more preferably 6 to 17, and particularly preferably 8 to 12. If the carbon number exceeds this range, the metal carboxylate is likely to be solid, and therefore tends to be difficult to be compatible with the component (A), leading to loss of activity. Conversely, if the carbon number is less than the range, the metal carboxylate is likely to be evaporated and the odor tends to become strong. In consideration of these respects, most preferred are metal salts of neodecanoic acid, versatic acid, 2,2-dimethyloctanoic acid, or 2-ethyl-2,5-dimethylhexanoic acid.

The metal carboxylate (b1) is preferably used in an amount of 0.1 to 10 parts by weight, and more preferably 0.2 to 5 parts by weight, per 100 parts by weight of the cross-linkable silyl group-containing organic polymer component (A) which consists of the polyoxyalkylene polymer (a1) and/or the vinylic polymer (a2). If the amount of the component (b1) is less than 0.1 parts by weight, the curing rate may be slow, and the curing reaction is less likely to proceed sufficiently. Conversely, if the amount of the component (b1) exceeds 10 parts by weight, the storage stability tends to be poor.

Each of the metal carboxylates mentioned above as the component (b1) may be used alone, or two or more of these may be used in combination.

The component (b2), the amine compound having two or more reactive silyl groups that can form a siloxane bond to be cross-linked, not only reduces the water absorption rate of the coating film but also serves as an adhesion promoter for the waterproof coating material.

As the reactive silyl group of the component (b2), the aforementioned reactive silyl groups represented by the formula (1) may also be used.

The component (b2) is an amine compound having two or more of the aforementioned reactive silyl groups in each molecule, and the reactive silyl groups in each molecule may be the same as or different from each other. The amino group of the component (b2) typically has a secondary or tertiary structure, and two or more of such components (b2) may be used in combination.

The component (b2) usable in the present invention is not particularly limited, and various compounds can be used.

Specific examples of the component (b2) include bis(3-trimethoxysilylpropyl)amine, bis(3-trimethoxysilylpropyl)-N-methylamine, N,N'-bis(3-trimethoxysilylpropyl)ethylenediamine, N,N'-bis(hydroxyethyl)-N,N'-bis(trimethoxysilylpropyl)ethylenediamine, and 1,3,5-tris(3-trimethoxysilylpropyl)isocyanurate.

The component (b2) is preferably used in an amount of 0.1 to 10 parts by weight, and more preferably 0.2 to 5 parts by weight, per 100 parts by weight of the cross-linkable silyl group-containing organic polymer component (A) which consists of the polyoxyalkylene polymer (a1) and/or the vinylic polymer (a2). If the amount of the component (b2) is less than 0.1 parts by weight, the adhesion of the coating film tends to be insufficient. If the amount thereof exceeds 10 parts by weight, the curability tends to be reduced.

The component (b3), the compound obtained by partial condensation of silyl groups of an aminosilane alone or of a combination of an aminosilane and another alkoxysilane compound, also serves as an adhesion promoter for the waterproof coating material, as well as reducing the water absorption rate of the coating film.

The component (b3) is a compound obtained by partial condensation of silyl groups of an aminosilane compound containing the reactive silyl group represented by the formula (1) alone or of a combination of the aminosilane compound and another alkoxysilane compound.

Specific examples of the alkoxysilane compound include: silane compounds such as vinyltrimethoxysilane, vinyltriethoxysilane, methyltrimethoxysilane, methyltriethoxysilane, ethyltriethoxysilane, phenyltrimethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate, and tetrabutyl orthosilicate; amino group-containing silanes such as 3-aminopropyltrimethoxysilane, 3-aminopropyltriethoxysilane, 3-aminopropyltriisopropoxysilane, 3-aminopropylmethyldimethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, N-(6-aminohexyl,)-3-aminopropyltrimethoxysilane, 3-(N-ethylamino)-2-methylpropyltrimethoxysilane, N-phenyl-3-aminopropyltrimethoxysilane, N-benzyl-3-aminopropyltrimethoxysilane, N-vinylbenzyl-3-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, bis(3-trimethoxysilylpropyl)amine, and N,N'-bis[(3-trimethoxysilyl)propyl]ethylenediamine; epoxy group-containing silanes such as 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane, and 2-(3,4-epoxycyclohexyl)ethyltriethoxysilane; vinyl-type unsaturated group-containing silanes such as 3-methacryloyloxypropyltrimethoxysilane, 3-methacryloyloxypropylmethyldimethoxysilane, 3-acryloyloxypropyltrimethoxysilane, and methacryloyloxymethyltrimethoxysilane; mercapto group-containing silanes such as 3-mercaptopropyltrimethoxysilane, 3-mercaptopropyltriethoxysilane, 3-mercaptopropylmethyldimethoxysilane, 3-mercaptopropylmethyldiethoxysilane, mercaptomethyltrimethoxysilane, and mercaptomethyltriethoxysilane; isocyanurate silanes such as 1,3,5-tris(3-trimethoxysilylpropyl)isocyanurate; and partially hydrolyzed condensates thereof. Each of these may be used alone, or two or more of these may be used in combination.

The component (b3) used in the present invention is not particularly limited, and various compounds can be used.

Specific examples of the component (b3) include X-40-2651 (Shin-Etsu Chemical Co., Ltd.), MS3301 (JNC CORP.), MS3302 (JNC CORP.), and DYNASYLAN 1146 (Evonik).

The component (b3) is preferably used in an amount of 0.1 to 10 parts by weight, and more preferably 0.2 to 5 parts by weight, per 100 parts by weight of the cross-linkable silyl group-containing organic polymer component (A) which consists of the polyoxyalkylene polymer (a1) and/or the vinylic polymer (a2). If the amount of the component (b3) is less than 0.1 parts by weight, the adhesion of the coating film tends to be insufficient. If the amount is more than 10 parts by weight, the curability tends to be reduced.

In the present invention, the use of at least one of the components (b1), (b2), and (b3) as the component (B) enables reduction in the water absorption rate of the coating film. In the case of using the component (b1) together with the component (b2) and/or the component (b3), the water absorption rate of the coating film can be more efficiently reduced.

The amount of the component (B) used in the present invention is preferably 0.1 to 20 parts by weight, and more preferably 0.2 to 10 parts by weight, per 100 parts by weight of the component (A). In the case of using the component (b1) as the component (B), the amount thereof is preferably 0.1 to 10 parts by weight, and more preferably 0.2 to 5 parts by weight, per 100 parts by weight of the component (A). In the case of using the component (b2) and/or the component (b3) as the component (B), the amount thereof is also preferably 0.1 to 10 parts by weight, and more preferably about 0.2 to 5 parts by weight, per 100 parts by weight of the component (A). If the amount of the component (B) is less than 0.1 parts by weight, the water absorption rate may not be sufficiently reduced, the curability may be reduced, and the adhesiveness may be reduced. If the amount thereof is more than 20 parts by weight, the storage stability and the physical properties of the coating film tend to be reduced.

### <<Component (C)>>

In the present invention, an amine compound (C) may be added as a promoter in the case that the waterproof coating material shows inappropriate curability.

Specific examples of the amine compound as the component (C) include, but not limited to: aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, dioctylamine, di(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine, and trioctylamine; aliphatic unsaturated amines such as triallylamine and oleylamine; aromatic amines such as laurylaniline, stearylaniline, and triphenylamine; and other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine, 3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5.4.0)undecene-7 (DBU), and 1,5-diazabicyclo(4.3.0)nonene-5 (DBN).

Among these, primary amines such as octylamine and laurylamine are preferred because of their high activity as a promoter, and amine compounds containing a hydrocarbon group that has at least one hetero atom are preferred. Examples of this hetero atom include N, O, S, and the like, although not limited. Examples of such amine compounds include those mentioned as other amines above. More preferred among these are amine compounds containing a hydrocarbon group that has a hetero atom on the 2nd to 4th carbon atom. Examples of such amine compounds include ethylenediamine, ethanolamine, dimethylaminoethylamine, diethylaminoethylamine, 3-hydroxypropylamine, diethylenetriamine, 3-methoxypropylamine, 3-lauryloxypropylamine, N-methyl-1,3-propanediamine, 3-dimethylaminopropylamine, 3-diethylaminopropylamine, 3-(1-piperazinyl)propylamine, and 3-morpholinopropylamine. More preferred among these are 3-diethylaminopropylamine and 3-morpholinopropylamine, because of their high activity as a promoter. Particularly preferred is 3-diethylaminopropylamine because it leads to a waterproof coating material with good adhesiveness, workability, and storage stability.

The amount of the amine compound as the component (C) is preferably about 0.01 to 5 parts by weight, and more preferably 0.1 to 4 parts by weight, per 100 parts by weight of the component (A). If the amount of the amine compound is less than 0.01 parts by weight, the curing rate may be slow, and the curing reaction may be less likely to proceed sufficiently. If the amount of the amine compound is more than 5 parts by weight, the pot life tends to be too short, thereby causing poor workability. In addition, the curing rate may rather be reduced.

### <Carboxylic acid>

The waterproof coating material of the present invention may contain a carboxylic acid as a promoter, if necessary. Specific examples thereof include the aforementioned various carboxylic acids containing an acid group of a metal carboxylate as the component (b1).

The carboxylic acid in question, similarly to the carboxylic acid containing an acid group of a metal carboxylate as the component (b1), preferably has a carbon number including the carbon of the carbonyl group of 2 to 20, more preferably 6 to 17, and particularly preferably 8 to 12. From the viewpoint of easy handleability (workability, viscosity) of the carboxylic acid, the carboxylic acid is preferably a dicarboxylic acid or a monocarboxylic acid, and more preferably a monocarboxylic acid. Further, the carboxylic acid is preferably a carboxylic acid whose carbon atom adjacent to the carbonyl group is a tertiary carbon (e.g. 2-ethylhexanoic acid) or a quaternary carbon (e.g. neodecanoic acid, pivalic acid) because of its high curing rate. It is particularly preferably a carboxylic acid whose carbon atom adjacent to the carbonyl group is a quaternary carbon. Also from the viewpoint of adhesiveness, the carboxylic acid is preferably a carboxylic acid whose carbon atom adjacent to the carbonyl group is a quaternary carbon.

From the viewpoint of availability, curability, and workability, the carboxylic acid is particularly preferably 2-ethylhexanoic acid, neodecanoic acid, versatic acid, 2,2-dimethyloctanoic acid, or 2-ethyl-2,5-dimethylhexanoic acid.

It should also be noted that the use of the carboxylic acid leads to good creep resistance and waterproof adhesiveness.

The amount of the carboxylic acid is preferably about 0.01 to 10 parts by weight, and more preferably about 0.1 to 5 parts by weight, per 100 parts by weight of the component (A). If the amount of the carboxylic acid is less than this range, the curing rate may be slow, and the curing reaction is less likely to proceed sufficiently. Conversely, if the amount of the carboxylic acid exceeds the range, the working life tends to be too short, resulting in poor workability. In addition, the creep resistance tends to be poor.

Each of the carboxylic acids may be used alone, or two or more of these may be used in combination.

### <Dehydrating agent>

The waterproof coating material of the present invention may contain a dehydrating agent for removing moisture in the waterproof coating material for the purpose of improving the storage stability. The dehydrating agent is preferably, for example, a liquid hydrolyzable ester compound. The hydrolyzable ester compound may be selected from the group consisting of trialkyl orthoformates such as trimethyl orthoformate, triethyl orthoformate, tripropyl orthoformate, and tributyl orthoformate, trialkyl orthoacetates such as trimethyl orthoacetate, triethyl orthoacetate, tripropyl orthoacetate, and tributyl orthoacetate, and the like.

Examples of other hydrolyzable ester compounds include hydrolyzable organosilicon compounds represented by the formula: R₄₋ₙSiYₙ wherein Y represents a hydrolyzable group; R represents an organic group and may or may not contain a functional group; n represents an integer of 1 to 4, preferably 3 or 4. Specific examples thereof include silane compounds such as vinyltrimethoxysilane, vinyltriethoxysilane, methyltrimethoxysilane, methyltriethoxysilane, ethyltriethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate, and tetrabutyl orthosilicate, and partially hydrolyzed condensates thereof; and silane coupling agents such as 3-aminopropyltrimethoxysilane, 3-glycidoxypropyltriethoxysilane, N-(2-aminoethyl)-3-aminopropyltrimethoxysilane, 3-acryloxypropyltrimethoxysilane, 3-methacryloyloxypropyltrimethoxysilane, 3-glycidoxypropyltrimethoxysilane, 3-mercaptopropyltrimethoxysilane, and N-(2-aminoethyl)-3-aminopropylmethyldimethoxysilane, and partially hydrolyzed condensates thereof. Each of these may be used alone, or two or more of these may be used in combination.

Since the dehydrating agent not only prevents the formation of a three-dimensional network structure due to hydrolysis of the polyoxyalkylene polymer or vinylic polymer followed by silanol condensation reaction during the storage, but also prevents ketimine from decomposing by water and reacting with an epoxy resin to cause curing, it is more preferred as a storage stability improver. The amount of the dehydrating agent is preferably 0.1 to 30 parts by weight, more preferably 0.3 to 20 parts by weight, and most preferably 0.5 to 10 parts by weight, per 100 parts by weight of the reactive silyl group-containing component (A).

When such a storage stability improver is added, the waterproof coating material is preferably anhydrated before the addition, but the improver may be added to the coating material that still contains moisture.

### <Silane coupling agent>

The waterproof coating material of the present invention may contain a silane coupling agent other than the components (b2) and (b3), if necessary. Specific examples of the silane coupling agent include: isocyanato group-containing silanes such as 3-isocyanatopropyltrimethoxysilane, 3-isocyanatopropyltriethoxysilane, 3-isocyanatopropylmethyldiethoxysilane, 3-isocyanatopropylmethyldimethoxysilane, (isocyanatomethyl)trimethoxysilane, (isocyanatomethyl)dimethoxymethylsilane, (isocyanatomethyl)triethoxysilane, and (isocyanatomethyl)diethoxymethylsilane; amino group-containing silanes such as 3-aminopropyltrimethoxysilane, 3-aminopropyltriethoxysilane, 3-aminopropyltriisopropoxysilane, 3-aminopropylmethyldimethoxysilane, 3-aminopropylmethyldiethoxysilane, 3-(2-aminoethyl)aminopropyltrimethoxysilane, 3-(2-aminoethyl)aminopropylmethyldimethoxysilane, 3-(2-aminoethyl)aminopropyltriethoxysilane, 3-(2-aminoethyl)aminopropylmethyldiethoxysilane, 3-(2-aminoethyl)aminopropyltriisopropoxysilane, 3-(6-aminohexyl)aminopropyltrimethoxysilane, 3-(N-ethylamino)-2-methylpropyltrimethoxysilane, 3-ureidopropyltrimethoxysilane, 3-ureidopropyltriethoxysilane, N-phenyl-3-aminopropyltrimethoxysilane, N-benzyl-3-aminopropyltrimethoxysilane, N-vinylbenzyl-3-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and N,N'-bis[3-(trimethoxysilyl)propyl]ethylenediamine; ketimine silanes such as N-(1,3-dimethylbutylidene)-3-(triethoxysilyl)-1-propanamine; mercapto group-containing silanes such as 3-mercaptopropyltrimethoxysilane, 3-mercaptopropyltriethoxysilane, 3-mercaptopropylmethyldimethoxysilane, 3-mercaptopropylmethyldiethoxysilane, mercaptomethyltrimethoxysilane, and mercaptomethyltriethoxysilane; epoxy group-containing silanes such as 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane, and 2-(3,4-epoxycyclohexyl)ethyltriethoxysilane; carboxy silanes such as 2-carboxyethyltriethoxysilane, 2-carboxyethylphenylbis(2-methoxyethoxy)silane, and N-2-(carboxymethyl)aminoethyl-3-aminopropyltrimethoxysilane ; vinyl-type unsaturated group-containing silanes such as vinyltrimethoxysilane, vinyltriethoxysilane, 3-methacryloyloxypropyltrimethoxysilane, 3-methacryloyloxypropylmethyldimethoxysilane, 3-acryloyloxypropyltriethoxysilane, and methacryloyloxymethyltrimethoxysilane; halogen-containing silanes such as 3-chloropropyltrimethoxysilane; and isocyanurate silanes such as tris(3-trimethoxysilylpropyl)isocyanurate. In addition, derivatives obtained by modifying the above substances, such as amino-modified silyl polymers, silylated amino polymers, unsaturated aminosilane complexes, phenylamino-long chain alkyl-silanes, aminosilylated silicones, and silylated polyesters, can also be used as the silane coupling agents. Examples of reaction products of the silane coupling agents include reaction products of any of the above aminosilanes and any of the above epoxysilanes, reaction products of any of the above aminosilanes and any of the above isocyanatosilanes, and partial condensates of the silane coupling agents.

The amount of the silane coupling agent is preferably 0.1 to 10 parts by weight, and more preferably 0.5 to 5 parts by weight, per 100 parts by weight of the component (A). If the amount is less than this range, the adhesiveness and the storage stability may be insufficient. Conversely, if the amount exceeds the range, a coating film may not be formed sufficiently.

### <Plasticizer>

The waterproof coating material of the present invention may contain any plasticizer, if necessary. It is advantageous to use the plasticizer together with the below-mentioned filler because such combination use enables greater elongation of the cured product and incorporation of a larger amount of filler; nevertheless, the plasticizer is not necessarily added. The plasticizer is not particularly limited, and examples thereof include, depending on the purpose such as adjusting the properties or conditions, phthalates such as dibutyl phthalate, diheptyl phthalate, di(2-ethylhexyl) phthalate, diisononyl phthalate, diisodecyl phthalate, and butyl benzyl phthalate; non-aromatic dibasic acid esters such as dioctyl adipate, dioctyl sebacate, dibutyl sebacate, and isodecyl succinate; benzoates such as 2-ethylhexyl benzoate; aliphatic esters such as butyl oleate and methyl acetyl ricinoleate; esters of polyalkylene glycols such as diethylene glycol dibenzoate, triethylene glycol dibenzoate, and pentaerythritol esters; phosphates such as tricresyl phosphate and tributyl phosphate; trimellitates; polystyrenes such as polystyrene and poly-α-methylstyrene; polybutadiene, polybutene, polyisobutylene, polybutadiene-acrylonitrile, and polychloroprene; chlorinated paraffins; hydrocarbon oils such as alkyldiphenyls and partially hydrogenated terphenyls; process oils; polyethers such as polyether polyols such as polyethylene glycol, polypropylene glycol, ethyleneoxide-propylene oxide copolymer, and polytetramethylene glycol, and alkyl derivatives of these polyether polyols which are obtained by modifying the hydroxy groups of the polyether polyols at one end or both ends or all the ends with an alkyl ester group, an alkyl ether group, or the like; epoxy group-containing plasticizers such as epoxidized soybean oil, benzyl epoxystearate, and E-PS; polyester plasticizers obtainable from a dibasic acid such as sebacic acid, adipic acid, azelaic acid, or phthalic acid and a dihydric alcohol such as ethylene glycol, diethylene glycol, triethylene glycol, propylene glycol, or dipropylene glycol; and vinylic polymers, including acrylic plasticizers, obtainable by polymerizing vinylic monomers by any of various methods.

The amount of the plasticizer is 5 to 150 parts by weight, preferably 10 to 120 parts by weight, and more preferably 20 to 100 parts by weight, per 100 parts by weight of the component (A). If the amount is less than 5 parts by weight, the effects of the plasticizer are less likely to be obtained. If the amount is more than 150 parts by weight, the mechanical strength of the cured product tends to be insufficient.

### <Filler>

The waterproof coating material of the present invention may contain a filler, if necessary. Examples of the filler include reinforcing fillers such as fumed silica, precipitated silica, crystalline silica, fused silica, dolomite, silicic anhydride, hydrous silicic acid, and carbon black; fillers such as heavy calcium carbonate, colloidal calcium carbonate, magnesium carbonate, diatomite, calcined clay, clay, talc, titanium oxide, bentonite, organic bentonite, ferric oxide, fine aluminum powder, flint powder, zinc oxide, activated zinc white, shirasu balloons, glass microballoons, organic microballoons of phenol resin, vinylidene chloride resin, or the like, and resin powders including PVC powder and PMMA powder; and fibrous fillers such as asbestos, glass fiber, and filaments. Preferred among these is heavy calcium carbonate because of its cost and viscosity. Also, in the case that the waterproof coating material is used as a waterproof coating material for heat-insulating white roofs, it is preferable to use titanium oxide.

The amount of the filler is 1 to 250 parts by weight, preferably 10 to 180 parts by weight, per 100 parts by weight of the component (A). If the amount is less than 1 part by weight, the effects of the filler is less likely to be obtained, whereas if the amount is more than 250 parts by weight, some problems may occur, for example, the viscosity of the waterproof coating material may be increased too much.

### <Thixotropic agent>

The waterproof coating material of the present invention may optionally contain a thixotropic agent (anti-sagging agent) in order to prevent sagging and improve the workability. Examples of the anti-sagging agent include, but not limited to, polyamide waxes; hydrogenated castor oil derivatives; metal soaps such as calcium stearate, aluminum stearate, and barium stearate; fine powder fillers such as fumed silica and colloidal calcium carbonate; organic fillers such as rubber powder; and fibrous substances such as organic fibers and inorganic fibers. Each of these thixotropic agents (anti-sagging agents) may be used alone, or two or more of these may be used in combination. The amount of the thixotropic agent is preferably in the range of 0.1 to 20 parts by weight per 100 parts by weight of the component (A).

### <Antioxidant>

The waterproof coating material of the present invention may contain an antioxidant (age resistor), if necessary. Use of an antioxidant enhances the heat resistance of the coating film. Examples of the antioxidant include hindered phenol antioxidants, monophenol antioxidants, bisphenol antioxidants, polyphenol antioxidants, and hindered amine antioxidants. Particularly preferred are hindered phenol antioxidants. The amount of the antioxidant is preferably 0.1 to 10 parts by weight, and more preferably 0.2 to 5 parts by weight, per 100 parts by weight of the component (A).

### <Light stabilizer>

The waterproof coating material of the present invention may contain a light stabilizer, if necessary. Use of a light stabilizer enables to prevent photooxidative degradation of the coating film. Examples of the light stabilizer include benzotriazole compounds, hindered amine compounds, and benzoate compounds. Particularly preferred are hindered amine compounds. The amount of the light stabilizer is preferably in the range of 0.1 to 10 parts by weight, and more preferably 0.2 to 5 parts by weight, per 100 parts by weight of the component (A).

### <Ultraviolet absorbent>

The waterproof coating material of the present invention may contain an ultraviolet absorbent, if necessary. Use of an ultraviolet absorbent enables to increase the surface weather resistance of the coating film. Examples of the ultraviolet absorbent include benzophenone compounds, benzotriazole compounds, salicylate compounds, substituted tolyl compounds, and metal chelate compounds. Particularly preferred among these are benzotriazole compounds. The amount of the ultraviolet absorbent is preferably in the range of 0.1 to 10 parts by weight, and more preferably 0.2 to 5 parts by weight, per 100 parts by weight of the component (A). It is preferable to use a phenol or hindered phenol antioxidant, a hindered amine light stabilizer, and a benzotriazole ultraviolet absorbent in combination.

### <Flame retardant>

The waterproof coating material of the present invention may contain a flame retardant such as phosphorous plasticizers including ammonium polyphosphate and tricresyl phosphate, aluminum hydroxide, magnesium hydroxide, thermoexpandable graphite, and the like. Each of the flame retardants may be used alone, or two or more of these may be used in combination.

The amount of the flame retardant is 5 to 200 parts by weight, preferably 10 to 100 parts by weight, per 100 parts by weight of the component (A).

### <Solvent>

The waterproof coating material of the present invention may contain a solvent as a diluent in order to reduce the viscosity of the waterproof coating material, increase the thixotropy, and improve the workability. The solvent is not particularly limited, and various compounds can be used. Specific examples thereof include hydrocarbon solvents such as toluene, xylene, heptane, hexane, and petroleum solvents; halogenated solvents such as trichloroethylene; ester solvents such as ethyl acetate and butyl acetate; ketone solvents such as acetone, methyl ethyl ketone, and methyl isobutyl ketone; ether solvents; alcohol solvents such as methanol, ethanol, and isopropanol; and silicone solvents such as hexamethylcyclotrisiloxane, octamethylcyclotetrasiloxane, and decamethylcyclopentasiloxane. The amount of the solvent is preferably 10 parts by weight or less, more preferably 5 parts by weight or less, still more preferably 1 part by weight or less, and particularly preferably 0.1 parts by weight or less, per 100 parts by weight of the component (A); most preferably, the waterproof coating material contains substantially no solvent.

### <Other various additives>

The waterproof coating material of the present invention may optionally contain various additives for adjustment of properties of the waterproof coating material or coating film. Examples of the additives include curability modifiers, radical inhibitors, metal deactivators, antiozonants, phosphorous peroxide decomposers, lubricants, pigments, blowing agents, repellents for ants, and antifungal agents. Each of these additives may be used alone, or two or more of these may be used in combination. Specific examples of the additives other than the aforementioned ones are described in JP H04-69659 B, JP H07-108928 B, JP S63-254149 A, JP S64-22904 A, and JP 2001-72854 A, for example.

### <Preparation of waterproof coating material>

The waterproof coating material of the present invention may be prepared as a one-pack curable composition which is obtained by compounding all the formulation components and storing the resulting composition in a hermetically closed container in advance, and which is curable by moisture in the air after application. Also, the waterproof coating material may be prepared as a two-pack curable composition such that a mixture of components including a curing catalyst, filler, plasticizer, and water is prepared separately as a curing agent, and this mixture is mixed with a base mixture of the waterproof coating material prior to application. In terms of workability, the waterproof coating material is preferably a one-pack curable composition.

In the case of preparing a one-pack waterproof coating material, it is preferable that formulation components containing water be dehydrated and dried prior to application, or be dehydrated under, for example, reduced pressure during the mixing and kneading because all the formulation components are mixed in advance. In the case of preparing a two-pack waterproof coating material, the formulation components are less likely to be gelled even if a small amount of water is contained because a curing catalyst needs not to be mixed beforehand into a base mixture including the reactive silyl group-containing polymer (A); still, if long-term storage stability is required, the formulation components are preferably dehydrated and dried.

The waterproof coating material of the present invention may be prepared by any methods including commonly used methods. Examples thereof include a method in which the aforementioned components are mixed and kneaded at room temperature or under heating with a mixer, roller, kneader, or the like; and a method in which the components are dissolved in a small amount of an appropriate solvent and then mixed.

When exposed to the air, the waterproof coating material of the present invention forms a three-dimensional network structure by the action of moisture, so as to be cured into a rubbery, elastic coating film.

The reactive silyl group-containing polyoxyalkylene polymer as the component (a1) of the present invention has relatively low viscosity. Thus, a waterproof coating material that can be applied as a non-aqueous type and/or non-solvent type (or as a high solid type with a small amount of solvent) can be easily designed. Because an aqueous emulsion waterproof coating material has a problem in that it needs a long time for forming a coating film at low temperature or high humidity and is difficult to apply under cold conditions, the waterproof coating material of the present invention is preferably a non-aqueous waterproof coating material. Also, from the viewpoint of reducing the environmental load, the waterproof coating material of the present invention is preferably a non-solvent type (or high solid type) waterproof coating material.

In the case of a non-aqueous waterproof coating material, the water content in the waterproof coating material of the present invention is preferably 1 part by weight or less, and more preferably 0.1 parts by weight or less, per 100 parts by weight of the component (A); most preferably, the coating material contains substantially no water. If the water content exceeds this range, the storage stability tends to be reduced and the properties of the coating film may be deteriorated.

In the case of a non-solvent type waterproof coating material, the solvent content in the waterproof coating material of the present invention is preferably 5 parts by weight or less, more preferably 1 part by weight or less, and particularly preferably 0.1 parts by weight or less, per 100 parts by weight of the component (A); most preferably, the coating material contains substantially no solvent. If the solvent content exceeds this range, a larger amount of VOCs tend to be present in the coating film formation and the environmental load tends to be greater.

Furthermore, the waterproof coating material of the present invention is preferably of one-pack type in terms of easy application, no risk of the deterioration of the properties of the coating film due to mixing failure or inappropriate mixing ratio, and the like.

### <<Applications>>

The waterproof coating material of the present invention can be used in a wide variety of applications; in particular, it is preferably used for building roofs requiring low water absorbency. Use of the waterproof coating material of the present invention improves problems such as leak of water and detachment of the coating film at sites where rainwater pools after it rains, and therefore the cycle of repairing the roof can be extended.

The base material for application of the waterproof coating material of the present invention is not particularly limited, and any roof base materials used in new construction or repairs of buildings can be used. Specific examples thereof include: inorganic base materials such as concrete, concrete plates, and concrete blocks serving as building roof materials; waterproof sheets such as asphalt, modified bitumen, EPDM, PVC, and TPO; metallic base materials such as metallic panels and metallic roofs; heat-insulating materials such as foamed polystyrene boards and foamed polyurethane boards; conventional waterproof coating materials such as acrylic waterproof coating materials, polyurethane-based waterproof coating materials, silicone-based waterproof coating materials, and polyurea-based waterproof coating materials. In the case of application to asphalt, modified bitumen, and the like, the waterproof coating material is preferably applied after a primer such as an acrylic primer is applied in order to prevent exudation of the base material components on the coating film.

A coating film obtained by curing the waterproof coating material of the present invention preferably has a thickness of 4 to 120 mils, more preferably 8 to 100 mils, and particularly preferably 12 to 80 mils. If the coating film thickness is less than that range, the properties of the coating film such as long-term durability, waterproofness, and tear resistance tend to deteriorate. If the coating film thickness is more than that range, the curability at low temperature tends to be reduced, and the waterproof coating material tends to sag when it is applied to a sloped base material.

The waterproof coating material of the present invention may be applied by any methods, and it can be applied by a conventional method using a brush, a spatula, a roller, an airless sprayer, or the like, as disclosed in JP H10-298488. Particularly in the case of applying the coating material to a large area, application with a roller or an airless sprayer is preferred from the viewpoint of application efficiency.

In general, aqueous coating materials and solvent-type coating materials require large amounts of water and solvent to be evaporated before curing. Thus, it is difficult to achieve the aforementioned coating film thickness by only one application, and two or more applications are generally required. In contrast, the waterproof coating material of the present invention is designed to contain little volatile components. Thus, a desired coating film thickness is easily achieved by only one application. Since the number of applications is correlated to the personnel expenses of craftsmen, the use of the waterproof coating material of the present invention is also effective to reduce application costs.

With respect to a measure of the workability of the waterproof coating material of the present invention upon application, the viscosity can be used as an indicator. The viscosity can be evaluated by the following method. A cartridge charged with a one-pack waterproof coating material is left at rest in a constant temperature and humidity room (23°C/50%RH) overnight. On the next day, the waterproof coating material is poured into a polystyrene cylindrical vessel (diameter: 1 inch, height: 3 inches), and then the viscosity (unit: centipoise (cp)) at 10 rpm is measured using a viscometer (Brookfield Engineering Laboratories, Inc., RVDV-I+, spindle No. 7). A viscosity lower than 20,000 cp is defined as A, a viscosity lower than 30,000 cp is defined as B, a viscosity lower than 40,000 cp is defined as C, and the viscosity not lower than this value is defined as D. Although any of the ranges A to D can be employed for the use of the waterproof coating material of the present invention, the viscosity preferably satisfies any of the ranges A to C, more preferably satisfies the range A or B, and most preferably satisfies the range A, in consideration of workability, easiness of adjusting the coating film thickness, and the like at low temperature.

The water absorption rate of a coating film obtained by curing the waterproof coating material of the present invention can be evaluated by the following method. The waterproof coating material of the present invention is formed into a sheet with a thickness of about 30 mils, and then cured in a constant temperature and humidity room (23°C/50%RH) for 24 hours, and further cured at 50°C for 24 hours. The obtained sheet-shaped cured product is cut into a size of 3 inches in length and 1 inch in width, and then its weight [Q1] (unit: g) is measured. The sample is immersed in pure water contained in a glass bottle and the bottle is covered and then left at rest in an oven at 50°C for four weeks. Thereafter, the glass bottle is left at rest at 23°C for two hours. Then, the sample is taken out and waterdrops on its surface are wiped off using a paper towel, and the resulting weight [Q2] (unit: g) is then measured. The water absorption rate [(Q2-Q1)/Q1 × 100] (unit: wt%) is calculated from the difference between the weights of the sample before and after immersion into water. The water absorption rate of a coating film obtained by curing the waterproof coating material of the present invention is preferably 8 wt% or lower, more preferably 6 wt% or lower, still more preferably 4 wt% or lower, particularly preferably 2 wt% or lower, and most preferably 1 wt% or lower. If the water absorption rate of the coating film exceeds this range, the functions of the coating film as a waterproof material may be insufficient; for example, deterioration of the adhesion of the coating film and of the coating film itself is likely to be caused.

With respect to a measure of the durability of a coating film obtained from the waterproof coating material of the present invention, the tensile properties of the cured product can be used as an indicator. The tensile properties of the coating film can be evaluated by the following method. The waterproof coating material of the present invention is formed into a sheet with a thickness of about 0.12 inches, and then cured in a constant temperature and humidity room (23°C/50%RH) for three days, and further cured at 50°C for four days. A dumbbell specimen is punched out from the obtained sheet-shaped cured product using a Die C defined in ASTM D412, and is subjected to a tensile test (tensile rate: 200 mm/min) at 23°C/50%RH to measure the strength (unit: MPa) and elongation (unit: %) at break. Although any strength and elongation can be employed for the use of the waterproof coating material of the present invention, it is preferable to have a strength of 0.8 MPa or higher and an elongation of 40% or higher, more preferably a strength of 1.2 MPa or higher and an elongation of 60% or higher, and most preferably a strength of 1.6 MPa or higher and an elongation of 80% or higher, in consideration of the tear resistance, stretch resistance, long-term durability, and the like of the coating film.

The waterproof coating material of the present invention can be used in any applications other than the aforementioned ones, and can be used in various applications such as sealing materials, adhesives, pressure-sensitive adhesives, coating materials, electrically insulating materials, foamed materials, potting materials, films, and gaskets.

### EXAMPLES

The following will illustrate the present invention in more detail referring to, but not limited to, examples and comparative examples.

The synthesis methods of the components (A) are described below.

### (Synthesis Example 1)

Propylene oxide was polymerized in the presence of polyoxypropylene diol having a molecular weight of about 2,000 as an initiator and a zinc hexacyanocobaltate glyme complex catalyst to provide a polypropylene oxide having a number average molecular weight of about 14,600 (polystyrene-equivalent molecular weight determined using a solvent delivery system HLC-8120 GPC (TOSOH CORP.), a TSK-GEL H type column (TOSOH CORP.), and THF as a solvent). To this hydroxy-terminated polypropylene oxide was then added a methanol solution of NaOMe in an amount of 1.2 equivalents to the hydroxy groups of the polypropylene oxide, and the methanol was distilled off. Allyl chloride was then added thereto to convert the terminal hydroxy group to an allyl group. Next, unreacted allyl chloride was removed under reduced pressure. The resulting unpurified allyl-terminated polypropylene oxide (100 parts by weight) was stir-mixed with n-hexane (300 parts by weight) and water (300 parts by weight), and then the water was removed by centrifugation. The obtained hexane solution was further stir-mixed with water (300 parts by weight), and then the water was again removed by centrifugation and the hexane was removed under reduced pressure. As a result, an allyl-terminated polypropylene oxide having a number average molecular weight of about 14,600 was obtained.

The obtained allyl-terminated polypropylene oxide (100 parts by weight) was allowed to react with methyldimethoxysilane (1.77 parts by weight) at 90°C for five hours in the presence of a solution of a platinum-vinylsiloxane complex in isopropanol (150 ppm, platinum content: 3 wt%) as a catalyst to provide a methyldimethoxysilyl-terminated polypropylene oxide (A-1). The silyl group introduction rate was determined by ¹H-NMR measurement (measured in a CDCl₃ solvent with JNM-LA400 (JEOL Ltd.)), and the results demonstrated that the average number of terminal methyldimethoxysilyl groups was 1.6 per molecule.

### (Synthesis Example 2)

An allyl-terminated polypropylene oxide having a number average molecular weight of about 4,800 was obtained by the same synthesis method as in Synthesis Example 1, using polyoxypropylene diol having a molecular weight of about 3,000.

The obtained allyl-terminated polypropylene oxide (100 parts by weight) was allowed to react with methyldimethoxysilane (5.99 parts by weight) at 90°C for five hours in the presence of a solution of a platinum-vinylsiloxane complex in isopropanol (150 ppm, platinum content: 3 wt%) as a catalyst to provide a methyldimethoxysilyl-terminated polypropylene oxide (A-2). The silyl group introduction rate was also determined by ¹H-NMR, and the results demonstrated that the average number of terminal methyldimethoxysilyl groups was 1.7 per molecule.

### (Synthesis Example 3)

Propylene oxide was polymerized using polyoxypropylene diol having a molecular weight of about 2,000 as an initiator and a zinc hexacyanocobaltate glyme complex catalyst to provide a bifunctional polypropylene oxide terminated with a hydroxy group and having a number average molecular weight of about 14,600 (referred to as polymer Q).

To the polymer Q (100 parts by weight) was added 3-isocyanatopropyltrimethoxysilane (4.1 parts by weight) and they were reacted at 90°C for five hours to provide a trimethoxysilyl-terminated polyoxypropylene polymer (A-3). The silyl group introduction rate was also determined by ¹H-NMR, and the results demonstrated that the average number of terminal trimethoxysilyl groups was 1.5 per molecule.

### (Synthesis Example 4)

Polyoxypropylene diol (100 g, 20 mmol, hydroxy value: 0.36 mmol/g, molecular weight based on terminal group analysis: about 5,000) and MDI (4,4'-diphenylmethane diisocyanate, Wako Pure Chemical Industries, Ltd.) (5.6 g, 22.5 mmol) at an NCO/OH ratio of 1.25 were mixed in a nitrogen atmosphere and stirred at 90°C for three hours, so that an NCO-terminated polyoxypropylene was obtained. Then, N-phenyl-3-aminopropyltrimethoxysilane (Y-9669, Momentive Performance Materials Inc.) (2.3 g, 9 mmol) was added and the mixture was stirred at 40°C for one hour, whereby a trimethoxysilyl-terminated polyoxypropylene (A-4) was obtained. The silyl group introduction rate was also determined by ¹H-NMR, and the results demonstrated that the average number of terminal trimethoxysilyl groups was 1.5 per molecule.

### (Synthesis Example 5)

Cuprous bromide (0.77 g), acetonitrile (8.93 g), n-butyl acrylate (33.8 g), and diethyl 2,5-dibromoadipate (2.15 g) were mixed, and the mixture was stirred at 70°C to 80°C for about 30 minutes. Pentamethyldiethylenetriamine (0.10 g) was added thereto to initiate the reaction. Thirty minutes after the initiation of the reaction, n-butyl acrylate (50.8 g), ethyl acrylate (1.4 g), and stearyl acrylate (14.0 g) were sequentially added over two hours. In the middle of the reaction, pentamethyldiethylenetriamine (0.04 g) was added as appropriate so that the internal temperature was adjusted at 70°C to 90°C. Four hours after the initiation of the reaction, the volatile matter was removed by heating with stirring at 80°C under reduced pressure. Then, acetonitrile (36.0 g), 1,7-octadiene (20.0 g), and pentamethyldiethylenetriamine (0.31 g) were added thereto and the mixture was stirred for eight hours. The resulting mixture was heated with stirring at 80°C under reduced pressure to remove the volatile matter.

Butyl acetate was added to this concentrate so that the polymer was dissolved, and then diatomite as a filter aid, and aluminum silicate and hydrotalcite as adsorbents were added thereto. This mixture was heated with stirring at an internal temperature of 100°C in an oxygen/nitrogen mixed gas atmosphere (oxygen concentration: 6%). Then, the solid matter in the liquid mixture was filtered off, and the filtrate was heated with stirring at an internal temperature of 100°C under reduced pressure to remove the volatile matter.

Further, aluminum silicate and hydrotalcite as adsorbents, and a heat-deterioration inhibitor were added to this concentrate, and the mixture was heated with stirring under reduced pressure (average temperature: about 175°C, degree of pressure reduction: 10 Torr or lower).

Aluminum silicate and hydrotalcite as adsorbents were further added, an antioxidant was added, and the mixture was heated with stirring at an internal temperature of 150°C in an oxygen/nitrogen mixed gas atmosphere (oxygen concentration: 6%).

Butyl acetate was added to this concentrate so that the polymer was dissolved. Then, the solid matter in the liquid mixture was filtered off, and the filtrate was heated with stirring under reduced pressure to remove the volatile matter, so that an alkenyl group-containing polymer <P1> was obtained.

This alkenyl group-containing polymer <P1>, dimethoxymethylsilane (2.0 molar equivalents to alkenyl groups), methyl orthoformate (1.0 molar equivalent to alkenyl groups), and a platinum catalyst (solution of a bis(1,3-divinyl-1,1,3,3-tetramethyldisiloxane)-platinum complex catalyst in xylene, hereinafter referred to as platinum catalyst) (platinum content: 10 mg per 1 kg of polymer) were mixed, and the mixture was heated with stirring at 100°C in a nitrogen atmosphere. The disappearance of alkenyl groups was confirmed, and then the reaction mixture was concentrated to provide a methyldimethoxysilyl-terminated polymer (A-5). The number average molecular weight of the polymer (A-5) was about 27,000, and the molecular weight distribution thereof was 1.3. The silyl group introduction rate was also determined by ¹H-NMR, and the results demonstrated that the average number of terminal methyldimethoxysilyl groups was 1.8 per molecule.

### (Synthesis Example 6)

Azobisisobutyronitrile (2.1 g) as a polymerization initiator was dissolved in a mixture of butyl acrylate (60.6 g), methyl methacrylate (14.8 g), stearyl methacrylate (20.1 g), 3-methacryloyloxypropyltrimethoxysilane (4.5 g), and isobutanol (20 g) to prepare a solution. This solution was dropwise added to isobutanol (24 g, heated to 110°C) over four hours, and then postpolymerization was carried out for two hours to give a copolymer having a number average molecular weight of 9,800 at a solid concentration of 68%. The silyl group introduction rate was also determined by ¹H-NMR, and the results demonstrated that the average number of terminal trimethoxysilyl groups was 1.5 per molecule.

The obtained polymer and the polymer (A-1) obtained in Synthesis Example 1 were blended at a solid ratio (weight ratio) of 30/70, and the volatile matter was distilled off (at 110°C under reduced pressure) using an evaporator, so that a transparent thick liquid (A-6) having a solid concentration of 99% or higher was obtained.

### (Examples 1 to 34, Comparative Examples 1 to 8)

According to the corresponding recipe shown in Tables 1 to 3, the components were weighed and kneaded using a mixer under dehydrated conditions, that is, in the substantial absence of moisture. Then, the mixture was put into a hermetically sealed moisture-proof container (polyethylene cartridge), whereby a one-pack waterproof coating material was prepared. The below-described evaluations were performed on thus obtained one-pack waterproof coating materials.

The formulation components used other than the component (A) were as follows.

### <Component (B)>

Component (b1): Reaxis C129 (tin 2-ethylhexanoate, Reaxis, Inc.), Neostann U-50 (tin versatate, Nitto Kasei Co., Ltd.)
Component (b2): Dynasylan 1124 (bis(3-trimethoxysilylpropyl)amine, Evonik)
Component (b3): Dynasylan 1146 (Evonik)

### <Component (C) >

Armeen 12D (laurylamine, Akzo Nobel)

### <Calcium carbonate>

Gamaco (Imerys), Ultra-Pflex (Specialty Minerals Inc.)

### <Titanium oxide>

Ti-Pure R902+ (DuPont)

### <Ultraviolet absorbent>

Tinuvin 328 (BASF)

### <Light stabilizer>

Tinuvin 770 (BASF)

### <Dehydrating agent>

Dynasylan VTMO (vinyltrimethoxysilane, Evonik)

### <Silane coupling agent>

Dynasylan DAMO-T (N-(2-aminoethyl)-3-aminopropyltrimethoxysilane, Evonik);
Dynasylan AMMO (3-aminopropyltrimethoxysilane, Evonik) ;
Dynasylan GLYMO (3-glycidoxypropyltrimethoxysilane, Evonik)

### <Carboxylic acid>

Versatic Acid 10 (versatic acid, Momentive Performance Materials Inc.)

### <Organotin catalyst>

Neostann U-220H (Nitto Kasei Co., Ltd.)

It should be noted that the organotin catalyst herein means a tin compound containing a carbon-tin bond.

### (Viscosity)

A cartridge containing the waterproof coating material was left at rest in a constant temperature and humidity room (23°C/50%RH) overnight. Then, the waterproof coating material was poured into a polystyrene cylindrical vessel (diameter: 1 inch, height: 3 inches) and the viscosity (unit: centipoise (cp)) at 10 rpm was measured using a viscometer (Brookfield Engineering Laboratories, Inc., RVDV-I+, spindle No. 7). A viscosity lower than 20,000 cp was indicated as A, that lower than 30,000 cp as B, that lower than 40,000 cp as C, and that not lower than this value as D.

### (Tensile properties)

A Teflon mold (width: 3.5 inches, length: 6 inches, thickness: 0.12 inches) was placed on a Teflon film, and the waterproof coating material was poured thereinto so as not to contain bubbles. Some surface portion was scraped off using a spatula so as to give a thickness of about 0.12 inches, and the resulting coating material was cured in a constant temperature and humidity room (23°C/50%RH) for three days, and then at 50°C for four days. A dumbbell specimen was punched out of the obtained cured product sheet using a Die C defined in ASTM D412, and was subjected to a tensile test at 23°C/50%RH to measure the strength and elongation at break of the specimen.

### (Water absorption rate)

A mold was prepared using one aluminum plate (thickness: 25.5 mils) and two masking tapes (thickness: about 5.5 mils) on a Teflon film. The waterproof coating material was poured thereinto, some surface portion was scraped off using a spatula, and then the coating material was cured in a constant temperature and humidity room (23°C/50%RH) for 24 hours, and then at 50°C for 24 hours. A sample having a size of 1 inch in width, 3 inches in length, and about 30 mils in thickness was cut out of the obtained cured product sheet, and its weight [Q1] (unit: g) was measured. The sample was immersed in pure water contained in a glass bottle and the bottle was covered and then left at rest in an oven at 50°C for four weeks. Thereafter, the glass bottle was left at rest at 23°C for two hours. Then, the sample was taken out and waterdrops on its surface was wiped off using a paper towel, and the resulting weight [Q2] (unit: g) was then measured. The water absorption rate [(Q2-Q1)/Q1 × 100] (unit: wt%) was calculated from the difference between the weights of the sample before and after immersion into water.

**[Table 1]**

| | | | | Example | | | | | | | | | | | | | | Comparative Example |
|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 1 |
| Component (A) | | (A-1) | | 50 | 30 | | | | 30 | 20 | | 30 | 30 | 30 | 30 | 30 | 30 | 30 |
| | | (A-2) | | 50 | 40 | 40 | 40 | | 30 | 20 | 10 | 40 | 40 | 40 | 40 | 40 | 40 | 40 |
| | | (A-3) | | | | 30 | | | | | | | | | | | | |
| | | (A-4) | | | | | 30 | | | | | | | | | | | |
| | | (A-5) | | | 30 | 30 | 30 | | 40 | 60 | 90 | 30 | 30 | 30 | 30 | 30 | 30 | 30 |
| | | (A-6) | | | | | | 100 | | | | | | | | | | |
| Component (B) | Component (b1) | Reaxis C129 | | 2 | 2 | 1 | 1 | 2 | 2 | 2 | 2 | 2 | 2 | 2 | 2 | 2 | 2 | |
| | | Neostann U-50 | | | | | | | | | | | | | | | | |
| | Component (b2) | Dynasilan 1124 | | | | | | | | | | | | | | | | |
| | Component (b3) | Dynasilan 1146 | | | | | | | | | | | | | | | | |
| Component (C) | | Armeen 12D | | 0.45 | 0.45 | 0.2 | 0.2 | 0.45 | 0.45 | 0.45 | 0.45 | 0.45 | 0.45 | 0.45 | 0.45 | 0.45 | 0.45 | 0.45 |
| Calcium carbonate | | Gamaco | | 80 | 80 | 80 | 80 | 80 | 80 | 80 | 80 | | 40 | 150 | 300 | 500 | | 80 |
| | | UltraPflex | | | | | | | | | | 10 | | | | | | |
| Titanium oxide | | Ti-Pure R902+ | | 20 | 20 | 20 | 20 | 20 | 20 | 20 | 20 | 10 | 20 | 20 | 20 | 20 | | 20 |
| Ultraviolet absorbent | | Tinuvin 328 | | 1 | 1 | 1 | 1 | 1 | 1 | 1 | 1 | 1 | 1 | 1 | 1 | 1 | 1 | 1 |
| Light stabilizer | | Tinuvin 770 | | 1 | 1 | 1 | 1 | 1 | 1 | 1 | 1 | 1 | 1 | 1 | 1 | 1 | 1 | 1 |
| Dehydrating agent | | Dynasylan VTMO | | 3 | 3 | 3 | 3 | 3 | 3 | 3 | 3 | 3 | 3 | 3 | 3 | 3 | 3 | 3 |
| Silane coupling agent | | Dynasylan DAMO-T | | 3 | 3 | 3 | 3 | 3 | 3 | 3 | 3 | 3 | 3 | 3 | 3 | 3 | 3 | 3 |
| Organotin catalyst | | SUL-11A | | | | | | | | | | | | | | | | 2 |
| Total | | | | 210.45 | 210.45 | 209.2 | 209.2 | 210.45 | 210.45 | 210.45 | 210.45 | 130.45 | 170.45 | 280.45 | 430.45 | 630.45 | 110.45 | 210 |
| Ratio [Y2/Y1] of weight of Component (a1) (Y2) to total weight of Component (A) (Y1) | | | % | 100 | 70 | 70 | 70 | 70 | 60 | 40 | 10 | 70 | 70 | 70 | 70 | 70 | 70 | 70 |
| Ratio [W2/W1] of weight of Component (A) (W2) to total weight of waterproof coating material (W1) | | | % | 47.5 | 47.5 | 47.8 | 47.8 | 47.5 | 47.5 | 47.5 | 47.5 | 76.7 | 58.7 | 35.7 | 23.2 | 15.9 | 90.5 | 47.6 |
| Viscosity | | at 10rpm | cp | A | A | A | B | B | B | D | D | A | A | B | D | D | A | A |
| Tensile properties | | Strength | MPa | 1.9 | 1.8 | 1.9 | 1.9 | 2.8 | 1.4 | 1.2 | 1.0 | 1.4 | 1.5 | 1.7 | 1.3 | 0.8 | 0.4 | 1.9 |
| | | Elongation | % | 115 | 110 | 105 | 101 | 112 | 95 | 69 | 52 | 98 | 108 | 102 | 43 | 24 | 75 | 80 |
| Water absorption rate | | | % | 3.0 | 2.9 | 3.0 | 3.1 | 3.1 | 3.6 | 4.2 | 5.4 | 3.9 | 3.4 | 2.9 | 2.8 | 2.9 | 4.8 | 54.7 |

As shown in Table 1, the waterproof coating materials containing the component (A) and the component (B) in Examples 1 to 14 had a clearly lower water absorption rate than the waterproof coating material containing no component (B) in Comparative Example 1.

The waterproof coating materials containing the component (A) and the component (B) with a ratio [Y2/Y1] of the weight of the component (a1) [Y2] to the total weight of the component (A) [Y1] of 55 wt% or higher in Examples 1 to 6 had lower viscosity and better workability, and provided cured products having higher strength and elongation and therefore toughness, and also having a lower water absorption rate, compared with the waterproof coating materials in Examples 7 and 8 with a ratio [Y2/Y1] lower than 55 wt%. Thus, the waterproof coating materials in Examples 1 to 6 are more excellent.

The coating materials containing the component (A) and the component (B) with a ratio [W2/W1] of the weight of the component (A) [W2] to the total weight of the waterproof coating material [W1] of 35 to 80 wt% in Examples 2, 9, 10, and 11 had lower viscosity, and provided cured products having higher strength and elongation, and also having a similar water absorption rate, compared with the coating materials in Examples 12 and 13 with a ratio [W2/W1] lower than 35 wt%. Thus, the waterproof coating materials in Examples 2, 9, 10, and 11 are more excellent. In addition, the cured products of the waterproof coating materials with a ratio [W2/W1] of 35 to 80 wt% in Examples 2, 9, 10, and 11 had higher strength and elongation and also had a lower water absorption rate compared witch Example 14 with a ratio [W2/W1] higher than 80 wt%. Thus, the waterproof coating materials in Examples 2, 9, 10, and 11 are more excellent.

**[Table 2]**

| | | | | Example | | | | | | | | | | | Comparative Example | | | |
|---|---|---|---|---|---|---|---|---|---|---|---|---|---|---|---|---|---|---|
| | | | | 2 | 15 | 16 | 17 | 18 | 19 | 20 | 21 | 22 | 23 | 24 | 2 | 3 | 4 | 5 |
| Component (A) | | (A-1) | | 30 | 30 | 30 | 30 | 30 | 30 | 30 | 30 | 30 | 30 | 30 | 30 | 30 | 30 | 30 |
| | | (A-2) | | 40 | 40 | 40 | 40 | 40 | 40 | 40 | 40 | 40 | 40 | 40 | 40 | 40 | 40 | 40 |
| | | (A-3) | | | | | | | | | | | | | | | | |
| | | (A-4) | | | | | | | | | | | | | | | | |
| | | (A-5) | | 30 | 30 | 30 | 30 | 30 | 30 | 30 | 30 | 30 | 30 | 30 | 30 | 30 | 30 | 30 |
| | | (A-6) | | | | | | | | | | | | | | | | |
| Component (B) | Component (b1) | Reaxis C129 | | 2 | | | | | 2 | 2 | | | 1 | 2 | | | | |
| | | Neostann U-50 | | | | | | | | | 2 | 2 | | | | | | |
| | Component (b2) | Dynasilan 1124 | | | 3 | 3 | | | 3 | | 3 | | | | | | | |
| | Component (b3) | Dynasilan 1146 | | | | | 3 | 3 | | 3 | | 3 | 3 | | | | | |
| Component (C) | | Armeen 12D | | 0.45 | 0.45 | 0.45 | 0.45 | 0.45 | 0.45 | 0.45 | 0.45 | 0.45 | 0.45 | | 0.45 | 0.45 | 0.45 | |
| Calcium carbonate | | Gamaco | | 80 | 80 | 80 | 80 | 80 | 80 | 80 | 80 | 80 | 80 | 80 | 80 | 80 | 80 | 80 |
| Titanium oxide | | Ti-Pure R902+ | | 20 | 20 | 20 | 20 | 20 | 20 | 20 | 20 | 20 | 20 | 20 | 20 | 20 | 20 | 20 |
| Ultraviolet absorbent | | Tinuvin 328 | | 1 | 1 | 1 | 1 | 1 | 1 | 1 | 1 | 1 | 1 | 1 | 1 | 1 | 1 | 1 |
| Light stabilizer | | Tinuvin 770 | | 1 | 1 | 1 | 1 | 1 | 1 | 1 | 1 | 1 | 1 | 1 | 1 | 1 | 1 | 1 |
| Dehydrating agent | | Dynasylan VTMO | | 3 | 3 | 3 | 3 | 3 | 3 | 3 | 3 | 3 | 3 | 3 | 3 | 3 | 3 | 3 |
| Silane coupling agent | | Dynasylan DAMO-T | | 3 | | | | | | | | | | 3 | 3 | | 0.5 | 3 |
| | | Dynasylan AMMO | | | | | | | | | | | | | | 3 | | |
| | | Dynasylan GLYMO | | | | | | | | | | | | | | | 2.5 | |
| Carboxylic acid | | Versatic 10 | | | 2 | 2 | 2 | 2 | | | | | 1 | | 2 | 2 | 2 | 2 |
| Total | | | | 210.45 | 210.45 | 210.45 | 210.45 | 210.45 | 210.45 | 210.45 | 210.45 | 210.45 | 210.45 | 210 | 210.45 | 210.45 | 210.45 | 210 |
| Ratio [Y2/Y1] of weight of Component (a1) (Y2) to total weight of Component (A) (Y1) | | | % | 70 | 70 | 70 | 70 | 70 | 70 | 70 | 70 | 70 | 70 | 70 | 70 | 70 | 70 | 70 |
| Ratio [W2/W1] of weight of Component (A) (W2) to total weight of waterproof coating material (W1) | | | % | 47.5 | 47.5 | 47.5 | 47.5 | 47.5 | 47.5 | 47.5 | 47.5 | 47.5 | 47.5 | 47.6 | 47.5 | 47.5 | 47.5 | 47.6 |
| Viscosity | | at 10rpm | cp | A | A | A | A | A | A | A | A | A | A | A | A | A | B | A |
| Tensile properties | | Strength | MPa | 1.8 | 1.4 | 1.5 | 1.7 | 1.7 | 1.7 | 1.7 | 2.0 | 1.9 | 1.6 | 1.6 | 1.8 | 2.0 | 1.6 | 1.6 |
| | | Elongation | % | 110 | 98 | 94 | 94 | 103 | 104 | 100 | 155 | 101 | 98 | 103 | 61 | 100 | 56 | 69 |
| Water absorption rate | | | % | 2.9 | 2.6 | 3.2 | 2.8 | 2.5 | 1.4 | 1.1 | 0.1 | 0.6 | 1.4 | 2.8 | 12.2 | 10.4 | 10.0 | 13.5 |

As shown in Table 2, the waterproof coating materials containing the component (A) and the component (B) in Examples 2 and 15 to 24 had a clearly lower water absorption rate than the waterproof coating materials containing no component (B) in Comparative Examples 2 to 5.

The waterproof coating materials containing the component (A) and the component (B), in which only the component (b2) or (b3) was used as the component (B), in Examples 15 to 18 had a clearly lower water absorption rate than the waterproof coating materials containing no component (B) and containing a common silane coupling agent in Comparative Examples 2 to 4, and thus the waterproof coating materials in Examples 15 to 18 are more excellent.

The waterproof coating materials containing the component (A) and the component (B), in which a combination of the component (b1) and the component (b2) or (b3) was used as the component (B), in Examples 19 to 23 had a clearly lower water absorption rate than the waterproof coating materials containing the component (A) and the component (B), in which one of the components (b1), (b2), and (b3) alone was used as the component (B), in Examples 2, 15 to 18, and 24. Thus, the waterproof coating materials in Examples 19 to 23 are more excellent.

**[Table 3]**

| | | | | Example | | | | | | | | | | Comparative Example | | |
|---|---|---|---|---|---|---|---|---|---|---|---|---|---|---|---|---|
| | | | | 25 | 26 | 27 | 28 | 29 | 30 | 31 | 32 | 33 | 34 | 6 | 7 | 8 |
| Component (A) | | (A-1) | | 100 | | | | | | | 60 | | | 100 | | |
| | | (A-2) | | | | | | | | | 40 | 40 | 40 | | | |
| | | (A-3) | | | 100 | | 100 | 100 | 100 | | | 60 | | | 100 | |
| | | (A-4) | | | | 100 | | | | 100 | | | 60 | | | 100 |
| | | (A-5) | | | | | | | | | | | | | | |
| | | (A-6) | | | | | | | | | | | | | | |
| Component (B) | Component (b1) | Reaxis C129 | | 2 | 1 | 1 | 1 | | | | | | | | | |
| | | Neostann U-50 | | | | | | 1 | 1 | 1 | 2 | 1 | 1 | | | |
| | Component (b2) | Dynasilan 1124 | | 3 | 3 | 3 | | 3 | | | | | | | | |
| | Component (b3) | Dynasilan 1146 | | | | | 3 | | 3 | 3 | 3 | 3 | 3 | | | |
| Component (C) | | Armeen 12D | | 0.45 | 0.2 | 0.2 | 0.2 | 0.2 | 0.2 | 0.2 | 0.45 | 0.2 | 0.2 | 0.45 | 0.2 | 0.2 |
| Calcium carbonate | | Gamaco | | 80 | 80 | 80 | 80 | 80 | 80 | 80 | 80 | 80 | 80 | 80 | 80 | 80 |
| Titanium oxide | | Ti-Pure R902+ | | 20 | 20 | 20 | 20 | 20 | 20 | 20 | 20 | 20 | 20 | 20 | 20 | 20 |
| Ultraviolet absorbent | | Tinuvin 328 | | 1 | 1 | 1 | 1 | 1 | 1 | 1 | 1 | 1 | 1 | 1 | 1 | 1 |
| Light stabilizer | | Tinuvin 770 | | 1 | 1 | 1 | 1 | 1 | 1 | 1 | 1 | 1 | 1 | 1 | 1 | 1 |
| Dehydrating agent | | Dynasylan VTMO | | 3 | 3 | 3 | 3 | 3 | 3 | 3 | 3 | 3 | 3 | 3 | 3 | 3 |
| Silane coupling agent | | Dynasylan DAMO-T | | | | | | | | | | | | 3 | 3 | 3 |
| Organotin catalyst | | SUL-11A | | | | | | | | | | | | 2 | 0.1 | 0.1 |
| Total | | | | 210.45 | 209.2 | 209.2 | 209.2 | 209.2 | 209.2 | 209.2 | 210.45 | 209.2 | 209.2 | 210 | 208.3 | 208.3 |
| Ratio [Y2/Y1] of weight of Component (a1) (Y2) to total weight of Component (A) (Y1) | | | % | 100 | 100 | 100 | 100 | 100 | 100 | 100 | 100 | 100 | 100 | 100 | 100 | 100 |
| Ratio [W2/W1] of weight of Component (A) (W2) to total weight of waterproof coating material (W1) | | | % | 47.5 | 47.8 | 47.8 | 47.8 | 47.8 | 47.8 | 47.8 | 47.5 | 47.8 | 47.8 | 47.6 | 48.0 | 48.0 |
| Viscosity | | at 10rpm | cp | A | A | B | A | A | A | B | A | A | A | A | A | B |
| Tensile properties | | Strength | MPa | 2.2 | 2.4 | 2.3 | 2.2 | 2.6 | 2.5 | 2.4 | 2.0 | 2.2 | 2.2 | 1.6 | 1.9 | 2.3 |
| | | Elongation | % | 158 | 121 | 145 | 115 | 155 | 138 | 158 | 111 | 100 | 107 | 80 | 61 | 73 |
| Water absorption rate | | | % | 2.4 | 2.2 | 2.5 | 2.0 | 1.8 | 1.6 | 1.6 | 1.1 | 1.4 | 1.3 | 54.7 | 52.0 | 56.2 |

As shown in Table 3, the waterproof coating materials containing the component (A) and the component (B) in Examples 25 to 34 had a clearly lower water absorption rate than the waterproof coating materials containing no component (B) in Comparative Examples 6 to 8. In particular, it was demonstrated that the compound (b3) obtained by partial condensation of silyl groups of an aminosilane alone or of a combination of an aminosilane and another alkoxysilane compound has properties equivalent to those of the metal carboxylate (b1) and the amine compound (b2) having two or more reactive silyl groups that can form a siloxane bond to be cross-linked.

## Claims

1. A waterproof coating material, comprising:
(A) 100 parts by weight of at least one of a polyoxyalkylene polymer (a1) and a vinylic polymer (a2), the polymers each containing a reactive silyl group represented by the following formula (1):
-SiR¹₃₋ₐXₐ (1)
wherein each R¹ independently represents a C1-C20 alkyl group, a C6-C20 aryl group, a C7-C20 aralkyl group, or a triorganosiloxy group represented by (R')₃SiO- in which R's each independently represent a C1-C20 substituted or unsubstituted hydrocarbon group; each X independently represents a hydroxy group or a hydrolyzable group; and a represents 1, 2 or 3; and
(B) 0.1 to 20 parts by weight of at least one compound including a compound (b3) obtained by partial condensation of silyl groups of an aminosilane alone or of a combination of an aminosilane and another alkoxysilane compound.

2. The waterproof coating material according to claim 1,
wherein the component (a1) has a backbone structure that comprises a polyoxypropylene polymer.

3. The waterproof coating material according to claim 1 or 2,
wherein the component (a2) has a backbone structure that comprises an alkyl (meth)acrylate copolymer.

4. The waterproof coating material according to any one of claims 1 to 3,
wherein the component (B) further comprises at least one of a metal carboxylate (b1) and an amine compound (b2) having two or more reactive silyl groups that can form a siloxane bond to be cross-linked.

5. The waterproof coating material according to any one of claims 1 to 4,
wherein a ratio [(Y2/Y1) × 100] of a weight of the component (a1) [Y2] to a total weight of the component (A) [Y1] is 55 wt% or higher.

6. The waterproof coating material according to any one of claims 1 to 5,
wherein a ratio [(W2/W1) × 100] of a weight of the component (A) [W2] to a total weight of the waterproof coating material [W1] is 35 to 80 wt%.

7. The waterproof coating material according to any one of claims 4 to 6,
wherein the metal carboxylate (b1) in the component (B) is used in an amount of 0.1 to 10 parts by weight.

8. The waterproof coating material according to any one of claims 4 to 7,
wherein the metal carboxylate (b1) in the component (B) is a tin(II) carboxylate compound.

9. The waterproof coating material according to any one of claims 1 to 8,
wherein a combination of an amine compound (b2) having two or more reactive silyl groups that can form a siloxane bond to be cross-linked and the compound (b3) obtained by partial condensation of silyl groups of an aminosilane alone or of a combination of an aminosilane and another alkoxysilane compound, or the compound (b3) obtained by partial condensation of silyl groups of an aminosilane alone or of a combination of an aminosilane and another alkoxysilane compound, in the component (B) is used in an amount of 0.1 to 10 parts by weight.

10. The waterproof coating material according to any one of claims 1 to 9, further comprising
(C) 0.01 to 5 parts by weight of an amine compound.

11. The waterproof coating material according to claim 10,
wherein the component (C) is a compound containing a primary amino group.

12. A waterproofing method, comprising
forming on a building roof a coating film with a thickness of 0.1016 to 3.048 mm (4 to 120 mils) from the waterproof coating material according to any one of claims 1 to 11.

13. A building roof, comprising
a coating film with a thickness of 0.1016 to 3.048 mm (4 to 120 mils) formed from the waterproof coating material according to any one of claims 1 to 11.

14. The waterproofing method according to claim 12,
wherein a desired thickness of the coating film is formed by a single application.

15. The building roof according to claim 13,
wherein a desired thickness of the coating film is formed by a single application.

## Patentansprüche

1. Wasserdichtes Beschichtungsmaterial umfassend:
(A) 100 Gewichtsanteile wenigstens eines von einem Polyoxyalkylenpolymer (a1) und einem Vinylpolymer (a2), wobei die Polymere jeweils eine reaktive Silylgruppe enthalten, die durch die allgemeine Formel (1) dargestellt ist:
-SIR¹₃₋ₐXₐ (1)
wobei jedes R¹ unabhängig eine C1-C20 Alkylgruppe, eine C6-C20 Arylgruppe, eine C7-C20 Aralkylgruppe oder eine Triorganosiloxylgruppe darstellt, die durch (R')₃SiO- dargestellt ist, die R's jeweils unabhängig eine C1-C20 substituierte oder unsubstituierte Kohlenwasserstoffgruppe darstellen, jedes X unabhängig eine Hydroxygruppe oder eine hydrolysierbare Gruppe darstellt und a 1, 2 oder 3 darstellt, und
(B) 0,1 bis 20 Gewichtsanteile wenigstens einer Verbindung, die eine Verbindung (b3) umfasst, die durch partielle Kondensation der Silylgruppen eines Aminosilans alleine oder einer Kombination eines Aminosilans und einer anderen Alkoxysilanverbindung erhältlich ist.

2. Wasserdichtes Beschichtungsmaterial nach Anspruch 1,
wobei die Komponente (a1) eine Rückgratstruktur aufweist, die ein Polyoxypropylenpolymer umfasst.

3. Wasserdichtes Beschichtungsmaterial nach Anspruch 1 oder 2,
wobei die Komponente (a2) eine Rückgratstruktur aufweist, die ein Alkyl(meth)acrylatcopolymer umfasst.

4. Wasserdichtes Beschichtungsmaterial nach einem der Ansprüche 1 bis 3,
wobei die Komponente (B) ferner wenigstens eines von einem Metallcarboxylat (b1) und einer Aminverbindung (b2) umfasst, die zwei oder mehrere reaktive Silylgruppen aufweist, die eine querzuvernetzende Siloxanbindung ausbilden können.

5. Wasserdichtes Beschichtungsmaterial nach einem der Ansprüche 1 bis 4,
wobei ein Verhältnis [(Y2/Y1) x 100] eines Gewichts der Komponente (a1) [Y2] zu einem Gesamtgewicht der Komponente (A) [Y1] 50 Gewichts-% oder mehr beträgt.

6. Wasserdichtes Beschichtungsmaterial nach einem der Ansprüche 1 bis 5,
wobei ein Verhältnis [W2/W1 x 100] eines Gewichts der Komponente (A) [W2] zu einem Gesamtgewicht des wasserfesten Beschichtungsmaterials [W1] 35 bis 80 Gewichts-% beträgt.

7. Wasserdichtes Beschichtungsmaterial nach einem der Ansprüche 4 bis 6,
wobei das Metallcarboxylat (b1) in der Komponente (B) in einer Menge von 0,1 bis 10 Gewichtsanteile verwendet ist.

8. Wasserdichtes Beschichtungsmaterial nach einem der Ansprüche 4 bis 7,
wobei das Metallcarboxylat (b1) in der Komponente (B) eine Zinn-(II)-Carboxylatverbindung ist.

9. Wasserdichtes Beschichtungsmaterial nach einem der Ansprüche 1 bis 8,
wobei eine Kombination aus einer Aminverbindung (b2) mit zwei oder mehreren reaktiven Silylgruppen, die eine querzuvernetzende Siloxanbindung bilden können, und der Verbindung (b3), die durch partielle Kondensation der Silylgruppen eines Aminosilans alleine oder einer Kombination eines Aminosilans und einer anderen Alkoxysilanverbindung erhältlich ist, oder der Verbindung (b3), die durch partielle Kondensation der Silylgruppen eines Aminosilans allein oder einer Kombination eines Aminosilans und einer anderen Alkoxysilanverbindung erhältlich ist, in der Komponente (B) in einer Menge von 0,1 bis 10 Gewichtsanteilen verwendet ist.

10. Wasserdichtes Beschichtungsmaterial nach einem der Ansprüche 1 bis 9, ferner umfassend
(C) 0,01 bis 5 Gewichtsanteile einer Aminverbindung.

11. Wasserdichtes Beschichtungsmaterial nach Anspruch 10,
wobei die Komponente (C) eine Verbindung ist, die eine primäre Aminogruppe enthält.

12. Verfahren zum Wasserdichtmachen, umfassend
Ausbilden eines Beschichtungsfilms mit einer Dicke von 0,1016 bis 3,048 mm (4 bis 120 mils) aus dem wasserdichten Beschichtungsmaterial nach einem der Ansprüche 1 bis 11 auf einem Gebäudedach.

13. Gebäudedach, umfassend
einen Beschichtungsfilm mit einer Dicke von 0,1016 bis 3,048 mm (4 bis 120 mils), der aus dem wasserdichten Beschichtungsmaterial nach einem der Ansprüche 1 bis 11 gebildet ist.

14. Verfahren zum Wasserdichtmachen nach Anspruch 12,
wobei eine gewünschte Dicke des Beschichtungsfilms durch einen einzigen Auftrag ausgebildet ist.

15. Gebäudedach nach Anspruch 13,
wobei eine gewünschte Dicke des Beschichtungsfilms durch einen einzelnen Auftrag ausgebildet ist.

## Revendications

1. Matériau de revêtement imperméable à l'eau, comprenant :
(A) 100 parties en masse d'au moins un d'un polymère de polyxoyalkylène (a1) et d'un polymère vinylique (a2), les polymères contenant chacun un groupe silyle réactif représenté par la formule (1) suivante :
-SiR¹₃₋ₐXₐ (1)
où chaque R¹ représente indépendamment un groupe alkyle en C1-C20, un groupe aryle en C6-C20, un groupe aralkyle en C7-C20, ou un groupe triorganosiloxy représenté par (R')₃SiO- où les R' représentent chacun indépendamment un groupe hydrocarboné substitué ou non substitué en C1-C20 ; chaque X représente indépendamment un groupe hydroxy ou un groupe hydrolysable ; et a représente 1, 2 ou 3 ; et
(B) de 0,1 à 20 parties en masse d'au moins un composé comprenant un composé (b3) obtenu par condensation partielle de groupes silyle d'un aminosilane seul ou d'une combinaison d'un aminosilane et d'un autre composé alcoxysilane.

2. Matériau de revêtement imperméable à l'eau selon la revendication 1,
dans lequel le constituant (a1) présente une structure de squelette qui comprend un polymère de polyoxypropylène.

3. Matériau de revêtement imperméable à l'eau selon la revendication 1 ou 2,
dans lequel le constituant (a2) présente une structure de squelette qui comprend un copolymère de (méth)acrylate d'alkyle.

4. Matériau de revêtement imperméable à l'eau selon l'une quelconque des revendications 1 à 3,
dans lequel le constituant (B) comprend de plus au moins un d'un carboxylate de métal (b1) et d'un composé amine (b2) présentant deux groupes silyle réactifs ou plus qui peuvent former une liaison siloxane à réticuler.

5. Matériau de revêtement imperméable à l'eau selon l'une quelconque des revendications 1 à 4,
dans lequel un rapport [(Y2/Y1) x 100] d'une masse du constituant (a1) [Y2] à une masse totale du constituant (A) [Y1] est de 55 % en masse ou supérieure.

6. Matériau de revêtement imperméable à l'eau selon l'une quelconque des revendications 1 à 5,
dans lequel un rapport [(W2/W1) x 100] d'une masse du constituant (A) [W2] à une masse totale du matériau de revêtement imperméable à l'eau [W1] est de 35 à 80 % en masse.

7. Matériau de revêtement imperméable à l'eau selon l'une quelconque des revendications 4 à 6,
dans lequel le carboxylate de métal (b1) dans le constituant (B) est utilisé dans une quantité de 0,1 à 10 parties en masse.

8. Matériau de revêtement imperméable à l'eau selon l'une quelconque des revendications 4 à 7,
dans lequel le carboxylate de métal (b1) dans le constituant (B) est un composé de type carboxylate d'étain (II).

9. Matériau de revêtement imperméable à l'eau selon l'une quelconque des revendications 1 à 8,
dans lequel une combinaison d'un composé amine (b2) présentant deux groupes silyle réactifs ou plus qui peuvent former une liaison siloxane à réticuler et du composé (b3) obtenu par condensation partielle de groupes silyle d'un aminosilane seul ou d'une combinaison d'un aminosilane et d'un autre composé alcoxysilane, ou du composé (b3) obtenu par condensation partielle de groupes silyle d'un aminosilane seul ou d'une combinaison d'un aminosilane et d'un autre composé alcoxysilane, dans le constituant (B) est utilisée dans une quantité de 0,1 à 10 parties en masse.

10. Matériau de revêtement imperméable à l'eau selon l'une quelconque des revendications 1 à 9, comprenant de plus
(C) de 0,01 à 5 parties en masse d'un composé amine.

11. Matériau de revêtement imperméable à l'eau selon la revendication 10,
dans lequel le constituant (C) est un composé contenant un groupe amino primaire.

12. Procédé d'imperméabilisation à l'eau, comprenant
la formation sur un toit d'immeuble d'un film de revêtement avec une épaisseur de 0,1016 à 3,048 mm (4 à 120 millièmes de pouce) formé à partir du matériau de revêtement imperméable à l'eau selon l'une quelconque des revendications 1 à 11.

13. Toit d'immeuble, comprenant
un film de revêtement avec une épaisseur de 0,1016 à 3,048 mm (4 à 120^{ème} de pouce) formé à partir du matériau de revêtement imperméable à l'eau selon l'une quelconque des revendications 1 à 11.

14. Procédé d'imperméabilisation à l'eau selon la revendication 12,
dans lequel une épaisseur souhaitée du film de revêtement est formée par une seule application.

15. Toit d'immeuble selon la revendication 13,
dans lequel une épaisseur souhaitée du film de revêtement est formée par une seule application.
